# EUROPÄISCHE PATENTANMELDUNG

(11) **EP 4 643 726 A1**
(43) Veröffentlichungstag der Anmeldung: **05.11.2025**
(21) Anmeldenummer: 24173953.1
(22) Anmeldetag: 02.05.2024
(51) Int. Cl.: A47J 36/10, A47J 43/07, A47J 27/08

(54) **ZUBEREITUNGSGEFÄSS FÜR EIN KÜCHENGERÄT UND KÜCHENGERÄT**

(71) Anmelder: Vorwerk & Co. Interholding GmbH, 42275 Wuppertal (DE)
(72) Erfinder: BAYARD, Christian, 58456 Witten (DE); JANSEN, Sebastian, 44803 Bochum (DE); THIES, Felix, 31303 Burgdorf (DE)
(74) Vertreter: Dr. Solf & Zapf Patent- und Rechtsanwalts PartG mbB

(57) **Zusammenfassung**

Die vorliegende Erfindung betrifft ein Zubereitungsmodul (1) zum Anordnen in einem Aufnahmebereich (2) einer Küchengerätebasis (3), wobei das Zubereitungsmodul (1) mindestens ein Zubereitungsgefäß (1a) und mindestens einen Deckel (6) aufweist, wobei das Zubereitungsgefäß (1a) mindestens einen Zubereitungsraum (5) zur Aufnahme von Speisen und mindestens eine Deckelverriegelungseinheit (7) aufweist, wobei der Deckel (6) in mindestens einer Deckelfreigabeposition der Deckelverriegelungseinheit (7) abnehmbar und in mindestens einer Deckelverriegelungsposition der Deckelverriegelungseinheit (7) mit dem Zubereitungsgefäß (1a) verriegelt ist, wobei die Deckelverriegelungseinheit (7) mindestens ein Sperrmittel (19) aufweist, wobei das Sperrmittel (19) in einer Sperrposition ein Bewegen der Deckelverriegelungseinheit (7) zumindest in die Deckelfreigabeposition verhindert, zumindest wenn eine Kraft aus dem Zubereitungsraum (5) auf den Deckel (6) wirkt. Die Deckelverriegelungseinheit (7) ist zumindest teilweise in Richtung der Deckelfreigabeposition bewegt, wenn sich das Sperrmittel (19) in der Sperrposition befindet, und dass das Sperrmittel (19) zumindest durch eine translatorische Bewegung des Deckels (6) in die Sperrposition gelangt.

## Beschreibung

Die Erfindung betrifft ein Zubereitungsmodul zum Anordnen in einem Aufnahmebereich einer Küchengerätebasis, insbesondere eines Küchengeräts. Das Zubereitungsmodul weist mindestens ein Zubereitungsgefäß und mindestens einen Deckel auf. Das Zubereitungsgefäß weist mindestens einen Zubereitungsraum zur Aufnahme von Speisen und mindestens eine Deckelverriegelungseinheit auf. Die Deckelverriegelungseinheit weist mindestens ein Sperrmittel auf. Der Deckel ist in mindestens einer Deckelfreigabeposition der Deckelverriegelungseinheit von dem Zubereitungsgefäß abnehmbar und verschließt in mindestens einer Deckelverriegelungsposition der Deckelverriegelungseinheit den Zubereitungsraum. In der Deckelverriegelungsposition ist der Deckel mit dem Zubereitungsgefäß verriegelt. Das Sperrmittel ist dazu vorgesehen, in einer Sperrposition ein Bewegen der Deckelverriegelungseinheit in die Freigabeposition zu verhindern, zumindest wenn eine Kraft aus dem Zubereitungsraum auf den Deckel wirkt oder beispielsweise ein Benutzer, insbesondere in einer Richtung parallel zu einer Längsachse L des Zubereitungsgefäßes, an dem Deckel zieht.

Küchengeräte mit Küchengerätebasis und Zubereitungsmodul, beispielsweise umfassend ein Zubereitungsgefäß und mindestens einen Deckel, sind im Stand der Technik in einer Vielzahl von Ausgestaltungen bekannt. Derartige Küchengeräte dienen dem automatischen, teilautomatischen oder manuellen Zubereiten, z. B. Zerkleinern, Mahlen, Pressen, Rühren, Garen, Dampfgaren und/oder Warmhalten, insbesondere von Speisen. Das Küchengerät weist üblicherweise eine Küchengerätebasis auf, die mindestens einen Aufnahmebereich für mindestens ein Zubereitungsmodul, z. B. mit einem Zubereitungsgefäß, bereitstellt. Der Aufnahmebereich weist häufig mindestens eine elektrische Schnittstelle auf, um ein in dem Aufnahmebereich angeordnetes Zubereitungsmodul mit mindestens einer Arbeitsspannung zu versorgen, beispielsweise für eine Heizeinrichtung des Zubereitungsmoduls, oder um beispielsweise Sensoren zu kontaktieren.

Alternativ oder zusätzlich ist im Aufnahmebereich mindestens eine mechanische Schnittstelle, z. B. eine Werkzeugschnittstelle, vorgesehen, die beispielsweise der Übertragung eines Drehmoments von einer Arbeitseinheit, z. B. eines Motors, der Küchengerätebasis beispielsweise auf ein an dem Zubereitungsmodul angeordnetes Werkzeug dient.

Um beispielsweise bei der Zubereitung von Speisen in dem Zubereitungsgefäß den Deckel mit dem Zubereitungsgefäß zu verriegeln, weist das Zubereitungsgefäß mindestens eine Deckelverriegelungseinheit auf, mit der der Deckel fixierbar und freigebbar ist. Das Sperrmittel wirkt mit der Deckelverriegelungseinheit zusammen und verhindert ein Bewegen der Deckelverriegelungseinheit in die Freigabeposition, zumindest wenn eine Kraft aus dem Zubereitungsraum auf den Deckel wirkt.

Die aus dem Stand der Technik bekannten Sperrmittel weisen allerdings den Nachteil auf, dass zur Verhinderung des Austritts von rotierenden Flüssigkeitstromben vor einem Entriegeln des Deckels eine Verweilzeit erfolgt, damit sich eine Flüssigkeitstrombe legen kann. Dies erfolgt aber auch dann, wenn sich tatsächlich keine Trombe gebildet hat. Dadurch entstehen für den Benutzer Wartezeiten, die den Benutzerkomfort reduzieren.

Der Erfindung liegt deshalb die Aufgabe zugrunde, ein Zubereitungsmodul mit einem Zubereitungsgefäß und ein Küchengerät anzugeben, bei denen eine vorteilhafte Ver- und Entriegelung des Deckels ermöglicht, aber gleichzeitig ein hoher Benutzerkomfort durch Reduzierung von Wartezeiten bei der Deckelentriegelung gewährleistet ist.

Die vorgenannte Aufgabe ist bei einem gattungsgemäßen Zubereitungsmodul mit den Merkmalen des Kennzeichnungsteils des Anspruchs 1 gelöst, nämlich dadurch, dass die Deckelverriegelungseinheit zumindest teilweise in Richtung der Freigabeposition bewegt ist, wenn sich das Sperrmittel in der Sperrposition befindet, und dass das Sperrmittel zumindest durch eine translatorische Bewegung des Deckels in die Sperrposition gelangt.

Das Zubereitungsgefäß des Zubereitungsmoduls ist zum Anordnen in einem Aufnahmebereich einer Küchengerätebasis eines Küchengerätes ausgebildet und eingerichtet. Das Zubereitungsmodul dient - bei Verwendung mit einer Küchengerätebasis - dem automatischen, teilautomatischen oder manuellen Zubereiten, z. B. Zerkleinern, Mahlen, Pressen, Rühren, Garen, Dampfgaren und/oder Warmhalten, insbesondere von Speisen. Das Zubereitungsgefäß weist insbesondere mindestens ein elektrisches Heizmittel zum Erwärmen des Zubereitungsraums auf. Ferner weist das Zubereitungsgefäß mindestens eine elektrische Schnittstelle, beispielsweise für die Kontaktierung des Heizmittels und/oder zur Kontaktierung von Sensoren auf. Die elektrische Schnittstelle ist insbesondere zum Zusammenwirken mit einer elektrischen Gegenschnittstelle der Küchengerätebasis ausgebildet.

Ferner weist das Zubereitungsgefäß vorzugsweise mindestens eine mechanische Schnittstelle, beispielsweise für die Übertragung eines Drehmoments, für ein Werkzeug auf, die zum Zusammenwirken mit einer mechanischen Gegenschnittstelle der Küchengerätebasis, insbesondere einer Werkzeugschnittstelle, ausgebildet ist. Das Zubereitungsgefäß weist vorzugsweise mindestens ein rotierbares Werkzeug auf, das fest mit dem Zubereitungsgefäß verbunden ist oder lösbar in dem Zubereitungsgefäß, insbesondere an einem Werkzeughalter, gehalten ist. Insbesondere ist das Werkzeug mit der mechanischen Schnittstelle gekoppelt.

Der Zubereitungsraum des Zubereitungsgefäßes ist mit dem Deckel verschließbar, wobei der Deckel unter Verwendung der Deckelverriegelungseinheit verriegelbar ist. Vorteilhaft ist zwischen Deckel und Zubereitungsgefäß mindestens eine Dichtung angeordnet. Vorzugsweise ist die Dichtung zum Zentrieren des Deckels beim Auflegen ausgebildet. Beispielsweise ist die Dichtung durch einen verschweißten Haltering am Deckel gehalten. Die Deckelverriegelungseinheit ist vorteilhaft zwischen einer Deckelfreigabeposition, in der der Deckel abnehmbar ist, und einer Deckelverriegelungsposition, in der der Deckel den Zubereitungsraum verschließt und mit dem Zubereitungsgefäß verriegelt ist, bewegbar, insbesondere rotierbar.

Das Zubereitungsmodul weist gemäß einer Ausgestaltung mindestens ein Zubereitungsgefäß und mindestens einen Deckel auf. Bevorzugt ist vorgesehen, dass das Zubereitungsmodul mindestens einen Deckel, insbesondere zum zumindest teilweisen oder vollständigen Verschließen des Zubereitungsraumes, aufweist. Es ist jedoch auch vorgesehen, dass das Deckelverriegelungselement zum Verriegeln spezieller Deckel, die nicht oder nicht nur dem Verschließen des Zubereitungsgefäßes dienen, verwendbar ist. Das Zubereitungsmodul weist vorzugsweise mindestens ein Funktionsmodul auf. Das Funktionsmodul ist beispielsweise auf einen Deckel und/oder das Zubereitungsgefäß aufsetzbar und/oder teilweise oder vollständig in das Zubereitungsgefäß, insbesondere in einen Zubereitungsraum, einbringbar. Das Funktionsmodul ist z. B. als Aufsatzzubehör oder als Einsatzzubehör ausgebildet. Besonders bevorzugt ist vorgesehen, dass der Deckel als Funktionsmodul ausgebildet ist. Das ist gleichbedeutend damit, dass das Funktionsmodul eine Deckelschnittstelle aufweist.

Ferner vorteilhaft ist vorgesehen, dass das Funktionsmodul mindestens eine Verbindungsschnittstelle zum Zusammenwirken mit einem Werkzeug und/oder einem Werkzeughalter des Zubereitungsgefäßes aufweist, um z. B. eine Rotation des Werkzeugs zu nutzen. Das ist insbesondere bei einem Funktionsmodul sinnvoll, das eine Werkzeugfunktion - ein Zubehörwerkzeug - aufweist, z. B. ein Entsaftermodul, ein Schneidmodul oder ein Schälmodul.

Besonders bevorzugt weist das Funktionsmodul mindestens eine Deckelschnittstelle auf, um mit einer Deckelverriegelungseinheit des Zubereitungsgefäßes, insbesondere einem Deckelverriegelungselement, zusammenzuwirken, und das Funktionsmodul - wie einen Deckel - mit dem Zubehörgefäß zu verriegeln und zu entriegeln. Das Funktionsmodul wird bei einer Verwendung durch das Zusammenwirken zuverlässig auf dem Zubereitungsgefäß oder in dem Zubereitungsgefäß gehalten. Das Funktionsmodul stellt in diesem Sinne insbesondere einen speziellen Deckel dar. Die Deckelschnittstelle weist vorzugsweise einen Teil oder alle Merkmale der beschriebenen Merkmale eines Deckels auf, die dieser für das Zusammenwirken mit der Deckelverriegelungseinheit, insbesondere dem Deckelverriegelungselement, benötigt. Insbesondere beispielsweise mindestens einen oder eine Mehrzahl von Nocken und/oder Zentrierelemente und/oder eine Abstützeinheit.

Das Funktionsmodul ist beispielsweise ein Reinigungsmodul, ein Rührmodul, ein Entsaftermodul, ein Dampfgarmodul, ein Warmhaltemodul, ein Schälmodul, ein Schneidmodul oder ein Reibemodul. Jedes der vorgenannten Funktionsmodule ist beispielsweise als Einsatz oder als Aufsatz ausgebildet, z. B. ein Reinigungseinsatz oder ein Reinigungsaufsatz. Solche Funktionsmodule, die keine Deckelschnittstelle aufweisen und vollständig in den Zubereitungsraum einbringbar sind, können insbesondere mit einem normalen Deckel verwendet werden.

Der Deckel oder das Funktionsmodul rotiert bei einer Ver- und Entriegelung insbesondere nicht. Bei einer Ver- oder Entriegelung erfolgt vorzugsweise lediglich eine translatorische Bewegung parallel zur Rotationsachse. Vorzugsweise wird eine Drehung des Deckels bzw. des Funktionsmoduls durch ein, insbesondere formschlüssiges, Zusammenwirken eines Abstützelements am Zubereitungsgefäß und eines Abstützgegenelements am Deckel verhindert.

Das Zubereitungsgefäß weist vorzugsweise mindestens einen Handgriff zum Transport sowie zur einfacheren Handhabung auf. Der Handgriff ist insbesondere im Wesentlichen senkrecht orientiert und ist auf einer Außenseite des Gehäuses des Zubereitungsmoduls angeordnet.

Das Sperrmittel wirkt derart mit der Deckelverriegelungseinheit zusammen, dass das weitere Bewegen der Deckelverriegelungseinheit in die Freigabeposition verhindert wird, wenn eine Kraft in einer Richtung parallel zu einer Längsachse des Zubereitungsgefäßes bzw. einer Rotationsachse eines Werkzeugs auf den Deckel wirkt. Die Kraft in dieser Richtung wird beispielsweise durch eine rotierende Flüssigkeitstrombe oder durch einen Druck bewirkt. Ebenfalls wird eine derartige Kraft bewirkt, wenn ein Benutzer manuell an dem Deckel zieht. Nachfolgend wird beispielhaft stets nur auf den Fall der von dem Zubereitungsraum ausgehenden Kraft Bezug genommen; die Ausführungen sollen aber gleichermaßen für eine durch einen Benutzer bewirkte translatorische Bewegung des Deckels gelten.

Das Zusammenwirken zwischen dem Sperrmittel und der Deckelverriegelungseinheit erfolgt erfindungsgemäß erst dann, wenn die Deckelverriegelungseinheit zumindest teilweise in Richtung der Freigabeposition bewegt ist. Die Sperrposition des Sperrmittels kann also erst dann erreicht werden, wenn die Deckelverriegelungseinheit bereits zumindest teilweise in Richtung der Freigabeposition bewegt worden ist. Das hat den Vorteil, dass ein Benutzer daran erkennen kann, dass keine fehlerhafte Blockierung der Deckelverriegelungseinheit vorliegt, sondern dass das Blockieren erfolgt, weil eine Kraft auf den Deckel wirkt.

Das Sperrmittel ist derart ausgebildet, dass es eine weitere Bewegung der Deckelverriegelungseinheit in die Freigabeposition verhindert, wenn sich der Deckel translatorisch in Bezug auf das Zubereitungsgefäß bewegt, also beispielsweise senkrecht nach oben weggedrückt oder abgehoben wird. Durch das Sperrmittel wird insbesondere verhindert, dass Flüssigkeit oder Speisen unbeabsichtigt aus dem Zubereitungsraum austreten können. Durch die Kraft aus dem Zubereitungsraum oder die Kraft eines Benutzers bewegt sich der gesamte Deckel vorteilhaft geringfügig, insbesondere in einer Richtung parallel zu einer Längsachse des Zubereitungsgefäßes oder der Rotationsachse eines Werkzeugs, von dem Zubereitungsgefäß weg, wodurch das Sperrmittel in die Sperrposition gelangt. Insbesondere hebt sich der Deckel geringfügig nach oben von dem Zubereitungsgefäß ab, ohne dass ein Entfernen des Deckels vom Zubereitungsgefäß erfolgt. Es ist insbesondere sowohl vorgesehen, dass sich durch die translatorische Bewegung des Deckels mindestens eine Öffnung zum Zubereitungsraum ausbildet, durch die Dampf entweichen bzw. sich ein Druck gezielt abbauen kann, als auch, dass der Deckel den Zubereitungsraum auch nach der translatorischen Bewegung verschließt. Es ist insbesondere vorgesehen, dass der Deckel nicht kreisrund ist, sondern oval ausgebildet ist.

Vorzugsweise ist vorgesehen, dass sich der Deckel bei einer Bewegung der Deckelverriegelungseinheit zwischen der Verriegelungsposition, der Freigabeposition und der Sperrposition ausschließlich in axialer Richtung, insbesondere parallel zu einer Längsachse des Zubereitungsgefäßes oder einer Rotationsachse eines Werkzeugs, - translatorisch - bewegt. Insbesondere erfolgt keine Rotation des Deckels selbst beim Ver- und Entriegeln. Vorzugsweise ist die Deckelverriegelungseinheit zwischen einer Deckelverriegelungsposition und einer Deckelfreigabeposition rotierbar.

Die Erfindung weist gegenüber dem Stand der Technik den Vorteil auf, dass ein Öffnen des Deckels unmittelbar nach dem Zubereiten einer Speise bewirkt werden kann. Nur für den Fall, dass tatsächlich eine Kraft aus dem Zubereitungsraum auf den Deckel wirkt, wird das anhand der durch die Kraft bewirkten, translatorischen Bewegung des Deckels erkannt, wodurch eine weitere Freigabe des Deckels blockiert wird. Liegt keine Kraft an dem Deckel an, erfolgt ein Öffnen ohne Unterbrechung, wodurch eine Verzögerung des Öffnungsvorgangs nur bedarfsweise erfolgt, wodurch der Benutzerkomfort durch Entfall von Wartezeiten gesteigert wird und gleichzeitig ein hohes Maß an Sicherheit gewährleistet ist.

Besonders bevorzugt ist gemäß einer ersten Ausgestaltung des Zubereitungsgefäßes vorgesehen, dass das Sperrmittel mindestens eine erste Sperrfläche und mindestens ein Sperrelement aufweist, und dass die translatorische Bewegung des Deckels durch ein Anliegen des Sperrelementes an der ersten Sperrfläche begrenzt wird. Das Sperrmittel befindet sich insbesondere dann in der Sperrposition, wenn das Sperrmittel an der ersten Sperrfläche anliegt. Die translatorische Bewegung des Deckels weg von dem Zubereitungsgefäß wird durch ein Anliegen des Sperrelementes an der ersten Sperrfläche begrenzt. Die erste Sperrfläche ist vorzugsweise im Wesentlichen orthogonal zu der Bewegungsrichtung des Deckels ausgerichtet. Insbesondere ist vorgesehen, dass das Sperrmittel eine Mehrzahl erster Sperrflächen, vorzugsweise mindestens oder genau drei oder mindestens oder genau vier erste Sperrflächen, aufweist. Beispielsweise ist das Sperrelement an dem Deckel und die Sperrfläche an dem Zubereitungsgefäß angeordnet.

Beispielsweise ist vorgesehen, dass die erste Sperrfläche eine Fläche in einer Ausnehmung ist. Insbesondere weist die Deckelverriegelungseinheit mindestens eine Ausnehmung auf und die erste Sperrfläche ist Teil der Ausnehmung. Vorzugsweise vollzieht der Deckel eine geringfügige Bewegung von dem Zubereitungsgefäß weg, um das Sperrelement an der ersten Sperrfläche anliegen zu lassen. Beispielsweise ist vorgesehen, dass diese Bewegung des Deckels von einem Sensor, beispielsweise einem Positionssensor, erkannt wird, der dann unmittelbar eine weitere Bewegung der Deckelverriegelungseinheit stoppt, beispielsweise indem ein Motor einer Antriebseinheit gestoppt wird.

Insbesondere um ein mechanisches Blockieren des Sperrmittels zu ermöglichen, ist gemäß einer weiteren Ausgestaltung des Zubereitungsmoduls vorgesehen, dass das Sperrmittel mindestens eine zweite Sperrfläche aufweist, und dass das Sperrelement in der Sperrposition durch ein zumindest teilweises Anliegen an der zweiten Sperrfläche mechanisch an einer weiteren Bewegung in mindestens einer Richtung, insbesondere in Richtung der Freigabeposition, gehindert wird. Die zweite Sperrfläche ist beispielsweise eine Fläche einer Ausnehmung. Vorzugsweise ist die zweite Sperrfläche im Wesentlichen parallel oder geneigt zu einer Bewegungsrichtung des Sperrelementes bei einer Bewegung des Deckels oder parallel oder geneigt zu einer Längsachse des Zubereitungsgefäßes orientiert. Wird also beispielsweise die Deckelverriegelungseinheit in Richtung der Deckelfreigabeposition rotiert, wird ein weiteres Rotieren der Deckelverriegelungseinheit durch Anliegen des Sperrelementes an der zweiten Sperrfläche mechanisch verhindert. Insbesondere ist vorgesehen, dass das Sperrmittel eine Mehrzahl zweiter Sperrflächen, vorzugsweise mindestens oder genau drei oder mindestens oder genau vier zweite Sperrflächen, aufweist.

Bevorzugt ist vorgesehen, dass die mechanische Blockierung des Sperrelements durch die zweite Sperrfläche erkannt wird, beispielsweise über die Erfassung einer Stromstärke an einem Motor der Antriebseinheit, so dass ein Antrieb der Deckelverriegelungseinheit, insbesondere durch eine Steuereinheit der Küchengerätebasis, abgeschaltet werden kann. Beispielsweise sind die erste Sperrfläche und die zweite Sperrfläche in einem Winkel zwischen 80° und 155°, vorzugsweise zwischen 120° und 140°, insbesondere von 90° oder von 135°, zueinander orientiert. Beispielsweise ist die zweite Sperrfläche eine Seitenfläche einer Ausnehmung. Vorzugsweise liegt das Sperrelement in der Sperrposition sowohl an der ersten Sperrfläche als auch an der zweiten Sperrfläche zumindest teilweise an.

Die Erfindung lässt sich auf einfache Weise dadurch realisieren, dass gemäß einer Ausgestaltung vorgesehen ist, dass die Deckelverriegelungseinheit mindestens ein um eine Rotationsachse rotierbar gelagertes Deckelverriegelungselement aufweist, und dass zumindest die erste Sperrfläche an dem Deckelverriegelungselement ausgebildet ist. Das Deckelverriegelungselement ist vorzugsweise ringartig ausgebildet. Beispielsweise ist das Deckelverriegelungselement relativ zum Deckel und relativ zum Zubereitungsraum rotierbar an dem Zubereitungsgefäß gehalten. Eine Rotation des Deckelverriegelungselementes in eine erste Rotationsrichtung bewirkt beispielsweise das Verriegeln des Deckels mit dem Zubereitungsgefäß. Eine Rotation des Deckelverriegelungselementes in eine der ersten Rotationsrichtung entgegengesetzte, zweite Rotationsrichtung bewirkt beispielsweise eine Freigabe des Deckels, sofern eine Bewegung in der zweiten Rotationsrichtung nicht durch das Sperrmittel, insbesondere das mit der ersten Sperrfläche zusammenwirkende Sperrelement, blockiert wird. Bevorzugt ist vorgesehen, dass das Sperrelement auf einer Innenfläche des Deckels und die Sperrfläche auf einer radial nach außen weisenden Fläche der Deckelverriegelungseinheit bzw. des Deckelverriegelungselementes angeordnet ist.

Vorzugsweise ist das Deckelverriegelungselement derart angeordnet, dass es nahezu vollständig vom dem Deckel überdeckt ist. Vorzugsweise wird die Größe des sichtbaren Teils des Deckelverriegelungselementes gesteigert, wenn sich das Sperrmittel in der Sperrposition befindet, also sich der Deckel zumindest teilweise vom Zubereitungsraum abgehoben hat.

Gemäß einer weiteren Ausgestaltung des Zubereitungsmoduls ist vorgesehen, dass die Deckelverriegelungseinheit zur Verriegelung des Deckels mindestens eine Verriegelungskulisse und mindestens einen Nocken aufweist. Die Verriegelungskulisse stellt eine Kontur dar, in der der Nocken bei einer Bewegung der Deckelverriegelungseinheit geführt wird, um den Deckel zu verriegeln bzw. zu entriegeln, wenn sie relativ zum Nocken bewegt, insbesondere rotiert, wird. Beispielsweise weist die Verriegelungskulisse mindestens eine Anlaufschräge auf, die im Zusammenwirken mit dem Nocken ein Heranziehen des Deckels an das Zubereitungsgefäß bewirkt, indem der Nocken an der Anlaufschräge abgleitet. Vorzugsweise ist vorgesehen, dass zumindest die erste Sperrfläche und/oder die zweite Sperrfläche des Sperrmittels an der Verriegelungskulisse bzw. im Verlauf der Verriegelungskulisse ausgebildet ist. Vorzugsweise ist die erste Sperrfläche unmittelbar angrenzend an die Anlaufschräge ausgebildet.

Die Anlaufschräge ist vorzugsweise derart ausgebildet, dass sie bei einer Bewegung der Deckelverriegelungseinheit, insbesondere bei einer Rotation des Deckelverriegelungselementes, zumindest eine axiale Verschiebung des Nockens in eine Richtung parallel zu einer Längsachse des Zubereitungsgefäßes bewirkt. Dadurch wird der Deckel um die Strecke entlang der Längsachse näher an das Zubereitungsgefäß herangebracht, um die auch der Nocken von der Anlaufschräge bewegt wird.

Vorteilhaft ist vorgesehen, dass die Deckelverriegelungseinheit mindestens oder genau zwei, mindestens oder genau drei oder mindestens oder genau vier Verriegelungskulissen und mindestens oder genau zwei, mindestens oder genau drei oder mindestens oder genau vier Nocken aufweist, insbesondere wobei jeweils ein Nocken mit einer Verriegelungskulisse zusammenwirkt. Beispielsweise ist vorgesehen, dass die Verriegelungskulisse mindestens eine Verriegelungsfläche aufweist. Der Nocken liegt in der Deckelverriegelungsposition des Deckels an der Verriegelungsfläche an und wird von dieser an einer Bewegung in eine Richtung parallel zur Längsachse des Zubereitungsgefäßes gehindert, wodurch der Deckel auf dem Zubereitungsgefäß verriegelt wird.

Alternativ oder zusätzlich ist vorgesehen, dass die erste Sperrfläche axial, insbesondere entlang einer Richtung parallel zur Längsachse des Zubereitungsgefäßes, versetzt zu der Verriegelungsfläche angeordnet ist. Zwischen der Verriegelungsfläche und der Sperrfläche ist beispielsweise eine Stufe ausgebildet, die den Betrag der axialen - translatorischen - Bewegung des Deckels definiert.

Damit die Nocken mit der Deckelverriegelungseinheit bzw. dem Deckelverriegelungselement zusammenwirken können, weist der Innentopf eine der Anzahl der Nocken entsprechende Anzahl an Aussparungen in einem oberen Rand auf. Besonders bevorzugt sind mindestens oder genau vier Aussparungen vorgesehen. Die Aussparungen sind bevorzugt paarweise angeordnet, wobei zwischen den Aussparungen eines Paares - ausgehend von der Längsachse L - ein Winkel von etwa 60° ausgebildet ist. Zwischen den Aussparungen der zwei Paare ist jeweils ein Winkel von etwa 120° ausgebildet.

Als besonders vorteilhaft hat sich gemäß einer weiteren Ausgestaltung des Zubereitungsgefäßes herausgestellt, wenn vorgesehen ist, dass der Nocken auch das Sperrelement des Sperrmittels ist, und dass der Nocken bei einer Bewegung in Richtung der Deckelfreigabeposition in die Sperrposition, insbesondere in eine Ausnehmung, gedrängt wird, wenn während der Bewegung eine Kraft in einer Richtung parallel zu einer Längsachse des Zubereitungsgefäßes auf den Deckel bzw. ausgehend von dem Zubereitungsraum wirkt. Die erste Sperrfläche des Sperrmittels ist vorzugsweise zwischen der Anlaufschräge und der Verriegelungsfläche der Verriegelungskulisse angeordnet. Dadurch ist sichergestellt, dass das Sperrmittel bei einer Bewegung des Nockens aus der Deckelverriegelungsposition in Richtung der Deckelfreigabeposition an der ersten und/oder zweiten Sperrfläche vorbeibewegt, insbesondere rotiert, wird und nur bei auf den Deckel wirkender Kraft an der ersten und/oder der zweiten Sperrfläche anliegt oder bei kraftfreiem Deckel weiter in Richtung der Deckelfreigabeposition bewegbar ist.

Vorzugsweise ist der Nocken an dem Deckel und die Verriegelungskulisse an einem um die Rotationsachse rotierbaren Deckelverriegelungselement angeordnet. Der Nocken wird folglich von der Verriegelungskulisse geführt, um den Deckel mit dem Zubereitungsgefäß zu verriegeln, wird aber auch verwendet, um ein vollständiges Entriegeln des Deckels zu blockieren, wenn eine beschriebene Kraft auf den Deckel wirkt. Vorzugsweise liegt der Nocken in der Sperrposition an der ersten und der zweiten Sperrfläche in einer Ausnehmung an. Die Ausnehmung ist beispielsweise zwischen der Verriegelungsfläche und der Anlaufschräge an der Verriegelungskulisse ausgebildet. Diese Ausnehmung stellt beispielsweise einen Rücksprung unmittelbar zwischen dem Ende der Anlaufschräge und der Verriegelungsfläche dar.

Der Nocken wird nur in diese Ausnehmung gedrängt, wenn auch tatsächlich eine Kraft auf den Deckel in eine Richtung parallel zu einer Längsachse des Zubereitungsgefäßes wirkt. Wirkt diese Kraft nicht, überstreicht der Nocken die Ausnehmung und damit die erste und/oder die zweite Sperrfläche und gelangt in die Deckelfreigabeposition, ohne dass für den Benutzer eine Wartezeit entsteht.

Ein weiteres Ausführungsbeispiel des Zubereitungsmoduls sieht das Anordnen der ersten Sperrfläche in der Ausnehmung vor. Die Ausnehmung weist vorzugsweise mindestens eine Führungsschräge auf, die in Richtung der Verriegelungsfläche der Verriegelungskulisse orientiert ist. Die Führungsschräge gewährleistet, dass der Nocken, nachdem er durch die auf den Deckel wirkende Kraft in die Ausnehmung gedrängt worden ist, bei einer entgegengesetzten Rotation des Deckelverriegelungselementes aus der Sperrposition wieder in die Deckelverriegelungsposition gelangen kann, indem der Nocken an der Führungsschräge entlanggleitet. Die Führungsschräge ist z. B. in etwa parallel zur Anlaufschräge orientiert, vorzugsweise aber etwas kürzer ausgebildet. Die Führungsschräge mündet an einem Ende beispielsweise in der ersten Sperrfläche und an einem zweiten Ende in der Verriegelungsfläche der Verriegelungskulisse.

Gemäß einer weiteren Ausgestaltung weist das Zubereitungsgefäß mindestens einen Innentopf und mindestens ein Gehäuse auf. Das Gehäuse umgibt den Innentopf umfänglich, vorzugsweise vollumfänglich. Der Innentopf ist aus dem Gehäuse entnehmbar und in das Gehäuse einsetzbar, vorzugsweise lösbar mit dem Gehäuse verriegelbar. Es ist bevorzugt vorgesehen, dass sich das Deckelverriegelungselement zumindest in der Deckelverriegelungsposition zumindest teilweise an einer Unterseite eines Randes des Innentopfes abstützt, um eine Kraft in axialer Richtung auf das Gehäuse zu übertragen. Der Innentopf weist vorzugsweise einen oberen Rand auf, der sich radial zumindest teilweise nach außen erstreckt. Vorzugsweise ist das Deckelverriegelungselement an dem Gehäuse des Zubereitungsgefäßes gelagert und stützt sich zumindest teilweise, insbesondere vollständig, in axialer und radialer Richtung an dem Gehäuse ab.

Um vorteilhaft eine Endposition, beispielsweise die Deckelverriegelungsposition, zu definieren, ist gemäß einer weiteren Ausgestaltung vorgesehen, dass die Deckelverriegelungseinheit mindestens ein Anschlagelement aufweist. Das Anschlagelement begrenzt eine Bewegung der Deckelverriegelungseinheit in der Deckelverriegelungsposition. Vorzugsweise ist das Anschlagelement als Vorsprung an dem Deckelverriegelungselement, insbesondere an der Verriegelungskulisse, ausgebildet. Wenn mehrere Verriegelungskulissen vorhanden sind, ist sowohl vorgesehen, dass ein Anschlagelement an mindestens oder genau einer Verriegelungskulisse oder an mindestens oder genau zwei Verriegelungskulissen der Mehrzahl an Verriegelungskulissen ausgebildet ist, oder dass an jeder Verriegelungskulisse ein Anschlagelement ausgebildet ist. Das Anschlagelement wirkt beispielsweise mit dem Nocken zusammen, indem der Nocken in der Deckelverriegelungsposition an dem Anschlagelement anliegt. Beispielsweise steht das Anschlagelement aus der Verriegelungsfläche der Verriegelungskulisse hervor. Vorzugsweise wirkt genau ein Nocken mit genau einem Anschlagelement zusammen, um die Deckelverriegelungsposition zu definieren. Vorzugsweise ist dieser Nocken einer der Nocken, die auf dem Umfang weiter von einer Abstützeinheit entfernt angeordnet sind als andere Nocken. Diese Position gewährleistet ein sicheres Erkennen des Anliegens des einen Nockens an dem Anschlagelement.

Ferner ist insbesondere gemäß einer weiteren Ausgestaltung vorgesehen, dass die Deckelverriegelungseinheit mindestens ein rotierbar gelagertes Deckelverriegelungselement aufweist, und dass ferner mindestens ein Gegenelement und mindestens ein Übertragungselement vorhanden sind. Das Gegenelement ist vorteilhaft zum Zusammenwirken mit einer Küchengerätebasis ausgebildet, beispielsweise dadurch, dass das Gegenelement von der Küchengerätebasis bewegbar ist, wenn das Zubereitungsgefäß im Aufnahmebereich angeordnet ist. Das Gegenelement und das Deckelverriegelungselement stehen über das Übertragungselement derart miteinander in Verbindung, dass eine Rotation des Gegenelementes um eine Rotationsachse, die beispielsweise mit der Längsachse des Zubereitungsgefäßes zusammenfällt, eine Rotation des Deckelverriegelungselementes bewirkt. Beispielsweise rotieren das Gegenelement, das Deckelverriegelungselement und das Übertragungselement um eine gemeinsame Rotationsachse.

Insbesondere ist vorgesehen, dass das Übertragungselement und das Gegenelement einstückig ausgebildet sind. Das Übertragungselement ist dann formschlüssig mit dem Deckelverriegelungselement verbunden, um ein gemeinsames Rotieren zu ermöglichen. Alternativ dazu ist vorgesehen, dass das Deckelverriegelungselement, das Übertragungselement und das Gegenelement einstückig ausgebildet sind. Das Deckelverriegelungselement, das Übertragungselement und das Gegenelement sind beispielsweise aus einem Kunststoff ausgebildet. Das Deckelverriegelungselement, das Übertragungselement und das Gegenelement sind vorzugsweise in dem Gehäuse des Zubereitungsgefäßes rotierbar gelagert. Beispielsweise ist der Innentopf aus dem Gehäuse entnehmbar, wobei das Deckelverriegelungselement, das Übertragungselement und das Gegenelement in dem Gehäuse verbleiben. Vorzugsweise sind das Deckelverriegelungselement und/oder das Übertragungselement und/oder das Gegenelement derart ausgebildet, dass sie den Innentopf - sofern dieser eingebracht ist - zumindest teilweise umgeben.

Vorzugsweise ist gemäß einer weiteren Ausgestaltung des Zubereitungsmoduls vorgesehen, dass der Innentopf, insbesondere an einem Fußbereich, mindestens eine Rippe aufweist. Die Rippe steht beispielsweise von dem Fußbereich in radialer Richtung hervor. Die Rippe ist vorzugsweise orthogonal zu einer Rotationsachse eines Werkzeugs für den Innentopf ausgerichtet bzw. die Rippe liegt vorzugsweise in einer Ebene, zu der die Rotationsachse eine Ebenennormale ist. Vorzugsweise weist das Gehäuse, insbesondere eine Verriegelungseinheit im Gehäuse, mindestens eine Gegenrippe auf. Die Gegenrippe ist in einer Verriegelungsposition der Verriegelungseinheit derart angeordnet, dass sie mit der Rippe am Innentopf kollidiert, wenn versucht wird, den Innentopf in das Gehäuse einzusetzen. Dadurch wird verhindert, dass der Innentopf in das Gehäuse einsetzbar ist, wenn das Gehäuse auf einer Küchengerätebasis angeordnet ist, insbesondere also, dass der Innentopf erst nachträglich eingesetzt wird. Wenn das Gehäuse - alleine - auf der Küchengerätebasis angeordnet ist, verhindert ein Zusammenwirken mit der Betätigungseinheit, dass eine Entriegelung der Verriegelungseinheit erfolgt. In der Entriegelungsposition der Verriegelungseinheit ist der Innentopf in das Gehäuse einsetzbar.

Die Erfindung betrifft ferner ein Küchengerät, das mindestens eine Küchengerätebasis und mindestens ein Zubereitungsmodul, mit mindestens einem Zubereitungsgefäß und insbesondere mindestens einem Deckel, nach einem der beschriebenen Ausführungsbeispiele aufweist. Vorzugsweise ist die Küchengerätebasis derart ausgebildet und eingerichtet, dass das Zubereitungsmodul, insbesondere das Zubereitungsgefäß, und die Küchengerätebasis im Aufnahmebereich zumindest teilweise formschlüssig zusammenwirken. Es ist insbesondere auch vorgesehen, dass das Zubereitungsmodul, insbesondere das Zubereitungsgefäß, lediglich im Aufnahmebereich aufgestellt wird.

Der Aufnahmebereich weist vorzugsweise mindestens eine Betätigungseinheit zum Zusammenwirken mit einem Gegenelement des Zubereitungsmoduls, insbesondere des Zubereitungsgefäßes auf. Vorzugsweise ist eine Bewegung der Betätigungseinheit auf das Gegenelement übertragbar, so dass durch die Betätigungseinheit das Gegenelement bewegbar ist. Beispielsweise ist mit der Betätigungseinheit und dem Gegenelement ein mechanisches Verriegeln des Zubereitungsmoduls, insbesondere des Zubereitungsgefäßes, im Aufnahmebereich möglich.

Die Betätigungseinheit weist mindestens eine Antriebseinheit und mindestens ein um eine Rotationsachse rotierbar gehaltenes Betätigungselement sowie mindestens ein ortsfestes Halteelement auf. Die Küchengerätebasis weist mindestens eine Steuereinheit auf, die dazu eingerichtet und ausgebildet ist zu erkennen, ob eine Bewegung des Gegenelementes blockiert ist, und eine Bewegung des Betätigungselements zu stoppen, wenn eine Blockierung erkannt wird.

Eine Blockierung liegt gemäß einer Variante der Erfindung beispielsweise dann vor, wenn sich das Sperrmittel in der Sperrposition befindet. Die Steuereinheit ist vorteilhaft dazu eingerichtet und ausgebildet zu erkennen, dass sich das Sperrmittel in der Sperrposition befindet und die Bewegung der Deckelverriegelungseinheit zu stoppen, insbesondere indem die Antriebseinheit gestoppt wird, wenn sich das Sperrmittel in der Sperrposition befindet.

Vorzugsweise ist vorgesehen, dass die Steuereinheit dazu eingerichtet und ausgebildet ist, die Sperrposition unter Verwendung mindestens einer Stromstärke einer Antriebseinheit zu erkennen, insbesondere nämlich, indem die Stromstärke ansteigt, wenn die Deckelverriegelungseinheit in der Sperrposition ist. Alternativ oder zusätzlich ist vorgesehen, dass das Erkennen unter Verwendung mindestens eines Sensors erfolgt, beispielweise eines Sensors, der eine Position und/oder eine Positionsveränderung des Deckels erfasst. Erkennt der Sensor die translatorische Bewegung des Deckels, wird eine Bewegung der Betätigungseinheit, beispielsweise durch Ausschalten einer Antriebseinheit, gestoppt. Mit einem Sensor kann beispielsweise erfasst werden, ob ein Sperrelement an der ersten und/oder zweiten Sperrfläche anliegt.

Beispielsweise wirkt das rotierbar gehaltene Betätigungselement mit dem Gegenelement des Zubereitungsgefäßes zusammen und treibt dieses an, um zumindest mit der Deckelverriegelungseinheit den Deckel zu ver- oder entriegeln und/oder um das Zubereitungsgefäß mit der Küchengerätebasis zu verriegeln und/oder um eine mechanische Funktion an dem Zubereitungsmodul zu bewirken. Bevorzugt ist eine Rotationsgeschwindigkeit der Betätigungseinheit, insbesondere des Betätigungselements, der Küchengerätebasis und des Gegenelements des Zubereitungsmoduls bei einer Rotation gleich.

Vorzugsweise ist vorgesehen, dass eine Rotation des Gegenelements eine Verriegelung des Zubereitungsgefäßes mit der Küchengerätebasis bewirkt. Das Gegenelement des Zubereitungsmoduls weist insbesondere mindestens einen in Richtung der Rotationsachse vorstehenden Wirkabschnitt und mindestens ein Mitnehmergegenelement auf. Das Mitnehmergegenelement weist mindestens eine Mitnehmergegenfläche zum Zusammenwirken mit einem vorbeschriebenen Mitnehmerelement der Küchengerätebasis auf. Die Mitnehmergegenfläche ist entlang einer Richtung parallel zur Rotationsachse des Gegenelementes versetzt zu dem Wirkabschnitt angeordnet. Auf diese Weise kann ein vorteilhaftes Zusammenwirken des Wirkabschnitts mit einem Halteelement einer Küchengerätebasis erfolgen, um das Zubereitungsgefäß zu verriegeln.

Das Gegenelement weist mindestens eine Ausnehmung auf, in die das Mitnehmerelement beim Einbringen des Zubereitungsmoduls in den Aufnahmebereich, insbesondere entlang einer Richtung parallel zur Rotationsachse, eindringen kann. Durch eine Rotation des Gegenelements wird z. B. mindestens ein Wirkabschnitt unter mindestens ein Halteelement rotiert, wodurch das Zubereitungsgefäß mit der Küchengerätebasis verriegelt wird. Die Ausnehmung ist vorzugsweise an das Mitnehmergegenelement angrenzend angeordnet. Die Anzahl der Ausnehmungen entspricht vorzugsweise der Anzahl an Mitnehmerelementen der Küchengerätebasis. Ebenfalls entspricht die Anzahl der Wirkabschnitte der Anzahl an Halteelementen der Küchengerätebasis, um ein vorteilhaftes Zusammenwirken der Küchengerätebasis mit dem Zubereitungsmodul zu ermöglichen.

Die Küchengerätebasis verfügt vorteilhaft über eine Wiegefunktion, so dass in oder auf einem Zubereitungsmodul angeordnete Lebensmittel gewogen werden können. Es ist insbesondere vorgesehen, dass Wiegesensoren an den Stellfüßen der Küchengerätebasis angeordnet sind und/oder dass Wiegesensoren im Aufnahmebereich angeordnet sind.

Gemäß einer Ausgestaltung des Küchengerätes ist vorgesehen, dass die Steuereinheit dazu eingerichtet und ausgebildet ist, die Antriebseinheit zu veranlassen, die Deckelverriegelungseinheit in die Freigabeposition zu überführen, wenn die Steuereinheit erkennt, dass sich das Sperrmittel nicht mehr in der Sperrposition, insbesondere vollständig außerhalb der Sperrposition, befindet. Alternativ oder zusätzlich ist vorgesehen, dass die Steuereinheit dazu eingerichtet und ausgebildet ist, die Antriebseinheit zu veranlassen, die Deckelverriegelungseinheit in die Freigabeposition zu überführen, wenn eine vorbestimmte Wartezeit verstrichen ist, nachdem die Steuereinheit erkannt hat, dass sich das Sperrmittel in der Sperrposition befindet. In der Wartezeit können sich beispielsweise rotierenden Flüssigkeitstromben legen, so dass keine Kraft mehr aus dem Zubereitungsraum auf den Deckel wirkt und der Deckel geöffnet werden kann.

Eine weitere Ausgestaltung des Küchengerätes sieht vor, dass die Steuereinheit dazu eingerichtet und ausgebildet ist, die Antriebseinheit zu veranlassen, nach dem Erkennen, dass sich das Sperrmittel in der Sperrposition befindet, die Deckelverriegelungseinheit wieder in die Verriegelungsposition zu überführen und, insbesondere nach einer vorbestimmten Wartezeit, die Deckelverriegelungseinheit erneut in Richtung der Freigabeposition zu bewegen. Wenn die Deckelverriegelungseinheit beim Überführen in die Deckelfreigabeposition von dem Sperrmittel in der Sperrposition blockiert wird, wird vorzugsweise das Sperrelement, beispielsweise der Nocken, wieder zurück in die Sperrposition, also in die Ausgangsposition - hier die Deckelverriegelungsposition -, bewegt. Nach einer Wartezeit, während der sich beispielsweise die Kraft aus dem Zubereitungsraum abbauen kann, wird erneut ein Öffnungsversuch gestartet, indem die Deckelverriegelungseinheit in Richtung der Freigabeposition bewegt wird. Insbesondere wird das Deckelverriegelungselement in Richtung der Freigabeposition rotiert.

Besonders bevorzugt ist die Steuereinheit dazu eingerichtet und ausgebildet, die vorbeschriebenen Vorgänge einzeln oder in Kombination so lange zu wiederholen, bis die Deckelverriegelungseinheit in die Freigabeposition überführt ist, ohne dass das Sperrmittel in der Sperrposition gelangt.

Die Erfindung betrifft ferner ein Verfahren zum Betrieb eines Zubereitungsmoduls mit einem Zubereitungsgefäß und einem Deckel oder einem Funktionsmodul, insbesondere ein Zubereitungsmodul mit zumindest einem Teil der Merkmale eines beschriebenen Ausführungsbeispiels, Das Verfahren weist zumindest die folgenden Verfahrensschritte auf:
- Rotieren einer Deckelverriegelungseinheit an dem Zubereitungsgefäß um eine Rotationsachse zumindest zwischen einer Deckelfreigabeposition und einer Deckelverriegelungsposition, um den Deckel zu ver- und entriegeln. Vorzugsweise wird die Rotation der Deckelverriegelungseinheit mittels einer Betätigungseinheit einer Küchengerätebasis bewirkt.
- Verbringen eines Sperrmittels in eine Sperrposition, wenn während einer Rotation der Deckelverriegelungseinheit in Richtung der Deckelfreigabeposition zumindest eine Kraft aus dem Zubereitungsraum auf den Deckel wirkt, wobei das Verbringen des Sperrmittels in die Sperrposition eine translatorische Bewegung des Deckels relativ zum Zubereitungsgefäß, insbesondere in einer Richtung parallel zu der Rotationsachse, umfasst. Das Verbringen wird durch die auf den Deckel wirkende Kraft bewirkt, die alternativ auch beispielsweise durch einen Benutzer aufgebracht werden kann, wenn dieser während des Entriegelns an dem Deckel zieht.

Weitere Ausgestaltungen der funktionalen und strukturellen Merkmale des Verfahrens ergeben sich aus der Beschreibung der Ausführungsbeispiele des Zubereitungsgefäßes, der Küchengerätebasis bzw. des Küchengeräts sowie deren Funktion.

Zudem betrifft die Erfindung eine Verwendung eines Zubereitungsmoduls nach einem der beschriebenen Ausführungsbeispiele auf einer Küchengerätebasis, insbesondere auf einer Küchengerätebasis bzw. eines Küchengeräts nach einem der beschriebenen Ausführungsbeispiele.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Küchengeräts mit Zubereitungsmodul in perspektivischer Ansicht,
- Fig. 2a bis 2c: ein Ausführungsbeispiel eines Deckels in unterschiedlichen Zuständen auf einem Zubereitungsgefäß,
- Fig. 3a bis 3d: eine prinzipielle Darstellung der Funktion eines Sperrmittels,
- Fig. 4: ein Zubereitungsgefäß gemäß Fig. 1 in perspektivischer Ansicht,
- Fig. 5: das Zubereitungsgefäß gemäß Fig. 4 in teilweiser Explosionsdarstellung,
- Fig. 6: einen Teil eines Zubereitungsgefäßes gemäß Fig. 4 in perspektivischer Darstellung,
- Fig. 7: ein Ausführungsbeispiel eines Gehäuses für ein Zubereitungsgefäß,
- Fig. 7a: eine Detailansicht des Gehäuses gemäß Fig. 7,
- Fig. 8: ein Ausführungsbeispiel einer Verriegelungseinheit in perspektivischer Ansicht,
- Fig. 9: das Ausführungsbeispiel eines Zubereitungsmoduls gemäß Fig. 1 ohne Gehäuse,
- Fig. 10a und 10b: ein Ausführungsbeispiel eines Gegenelements mit Übertragungselement und Deckelverriegelungselement,
- Fig. 11: ein Ausführungsbeispiel eines Zubereitungsmoduls in perspektivischer Ansicht von unten,
- Fig. 12a bis 12c: einen beispielhaften Ablauf der Verriegelung eines Werkzeughalters in einem Zubereitungsgefäß,
- Fig. 13: ein Ausführungsbeispiel eines Deckels von der Deckelunterseite,
- Fig. 14: ein Ausführungsbeispiel einer Abstützeinheit an einem Zubereitungsmodul,
- Fig. 15: eine Schnittansicht im Bereich des Deckels eines Zubereitungsmoduls,
- Fig. 16: ein Aufnahmebereich einer Küchengerätebasis in perspektivischer Ansicht in einem ersten Zustand,
- Fig. 17: der Aufnahmebereich gemäß Fig. 16 in einem zweiten Zustand,
- Fig. 18: einen Schnitt durch den Aufnahmebereich mit aufgesetztem Zubereitungsgefäß,
- Fig. 19: eine Detailansicht eines Ausführungsbeispiels eines Gehäuses von der Unterseite,
- Fig. 20: ein Ausführungsbeispiel eines Gehäuses in perspektivischer Ansicht,
- Fig. 21: ein Ausführungsbeispiel einer Küchengerätebasis in einem Teilschnitt, und
- Fig. 22: ein Ausführungsbeispiel eines Funktionsmoduls in geschnittener Ansicht.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

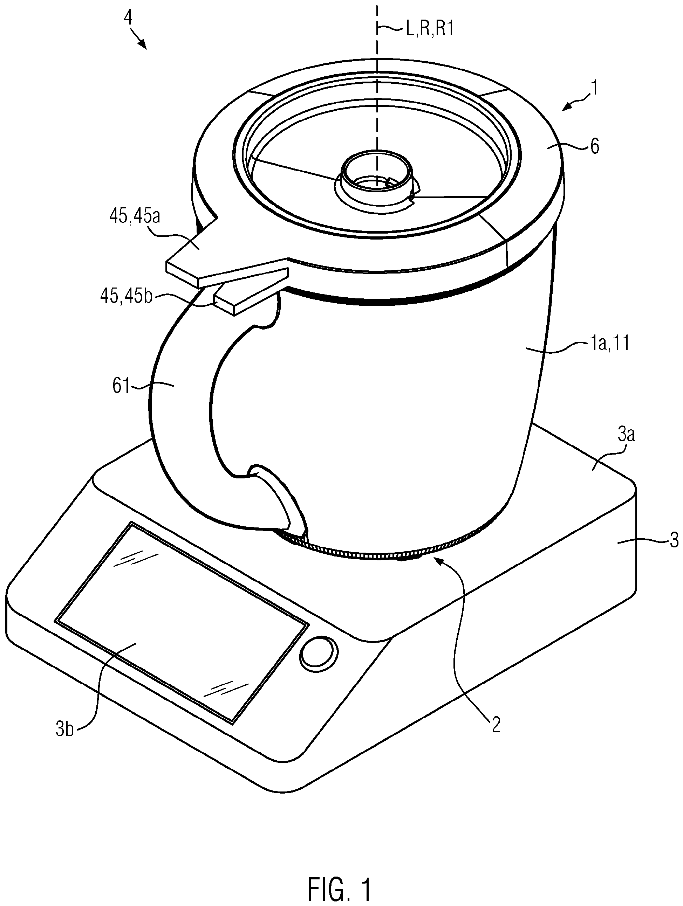

Fig. 1 zeigt ein Ausführungsbeispiel eines Zubereitungsmoduls 1, das zum Anordnen in einem Aufnahmebereich 2 einer Küchengerätebasis 3 eines Küchengerätes 4 vorgesehen ist. Das Zubereitungsmodul 1 umfasst hier ein Zubereitungsgefäß 1a und einen Deckel 6. Das Zubereitungsgefäß 1 ist auf eine flache Oberseite 3a der Küchengerätebasis 3 aufstellbar, um mit der Küchengerätebasis 3 zusammenzuwirken. Die Küchengerätebasis 3 weist mindestens eine kombinierte Anzeige- und Eingabevorrichtung 3b in Form eines Touchscreens auf, um Funktionen des Küchengeräts 4 zu steuern. Zusätzlich kann eine weitere elektromechanische Eingabevorrichtung in Form eines Drehschalters vorhanden sein.

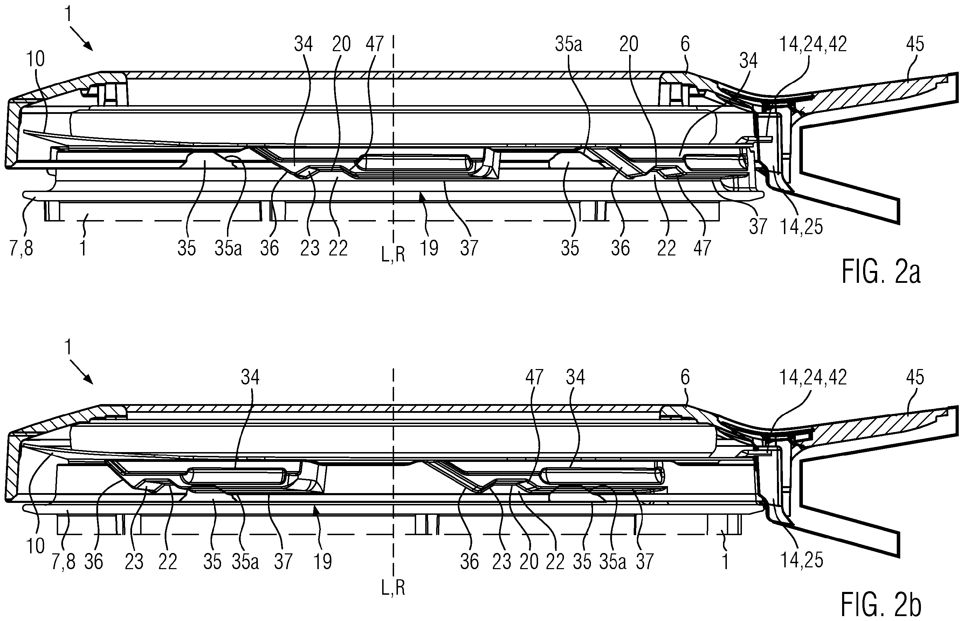

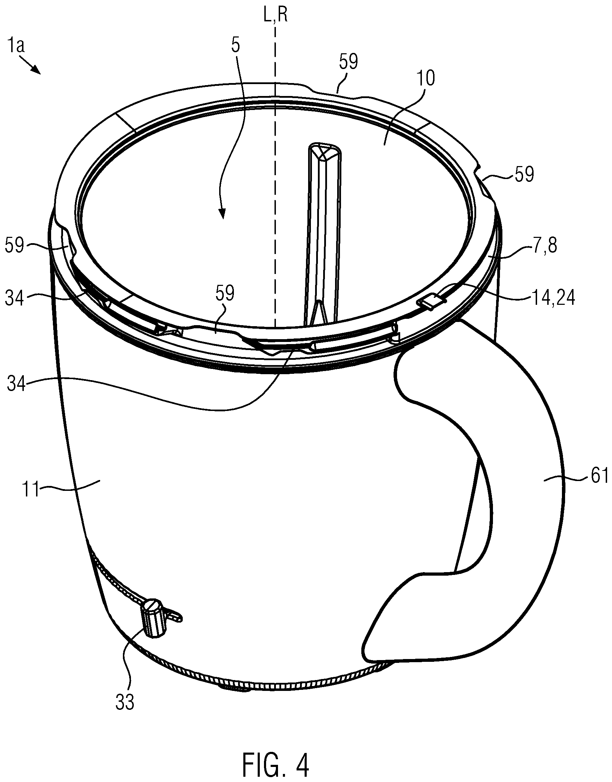

Der Aufbau des Zubereitungsgefäßes 1a ist insbesondere den Fig. 4 bis 12c und Fig. 20 zu entnehmen. Das Zubereitungsgefäß 1a weist mindestens einen Zubereitungsraum 5 - siehe beispielsweise Fig. 4 - zur Aufnahme von Speisen auf. Der Zubereitungsraum 5 ist mit dem Deckel 6 verschließbar, wobei der Deckel 6 mit einer Deckelverriegelungseinheit 7 mit dem Zubereitungsgefäß 1a verriegelbar ist, wie nachfolgend insbesondere mit Bezug auf Fig. 2a bis 2c beschrieben werden wird. Der Deckel 6 weist ein Griffstück 45 auf. Das Griffstück 45 weist ein erstes Griffstückelement 45a und ein zweites Griffstückelement 45b auf, die etwa V-förmig zueinander angeordnet sind.

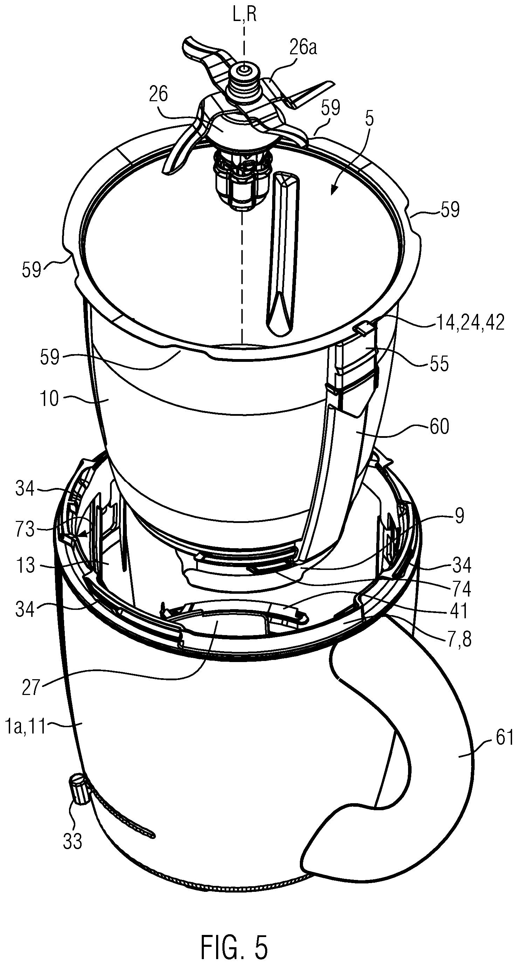

Das Zubereitungsgefäß 1a weist gemäß Fig. 4, Fig. 5 und Fig. 9 einen Innentopf 10 auf, in dem der Zubereitungsraum 5 ausgebildet ist Der Innentopf 10 des Zubereitungsgefäßes 1a ist in ein Gehäuse 11 einbringbar und in dem Gehäuse 11 lösbar verriegelbar. Das Gehäuse 11 ist in den Fig. 5, 6, 7 und 20 separat dargestellt. Fig. 4 zeigt das vollständig montierte Zubereitungsgefäß 1a mit verriegeltem Innentopf 10. Fig. 5 zeigt eine Explosionsansicht, nämlich eine Ansicht des Innentopfes 10 beim Einbringen bzw. Herausnehmen in bzw. aus dem Gehäuse 11, beispielsweise zu Reinigungszwecken. Eine elektrische Schnittstelle 9 des Zubereitungsgefäßes 1a ist fest mit dem Innentopf 10 verbunden. Ferner ist ein Leitungsführungs- und Elektronikkanal 60, der ein nachfolgend beschriebenes Erkennungsmittel 55 beinhaltet, an dem Innentopf 10 angeordnet. Mit dem demontierbaren Werkzeughalter 26 ist ein Werkzeug 26a, hier ein Werkzeug zum Schneiden und Rühren, fest verbunden. Alternativ dazu ist vorgesehen, dass das Werkzeug 26a von dem Werkzeughalter 26 lösbar ist. Der Werkzeughalter 26 ist dann insbesondere mit und ohne Werkzeug 26a in den Innentopf 10 einsetzbar, vorzugsweise auch verriegelbar.

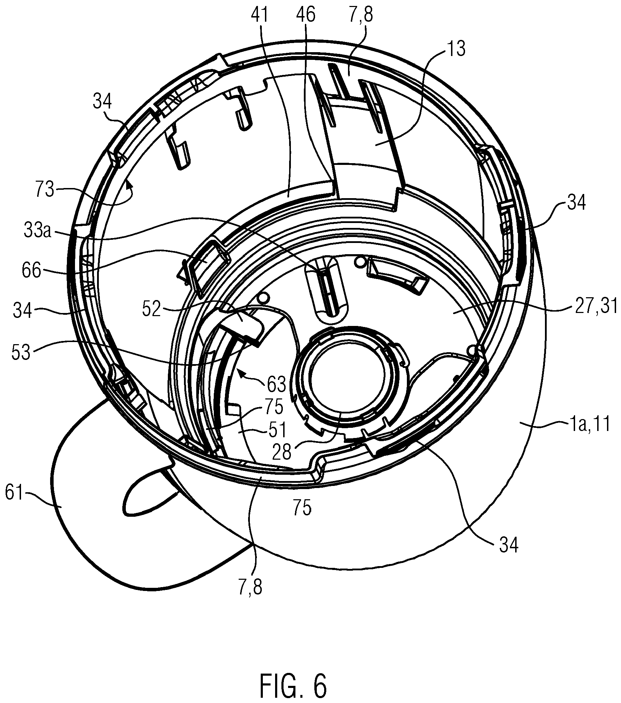

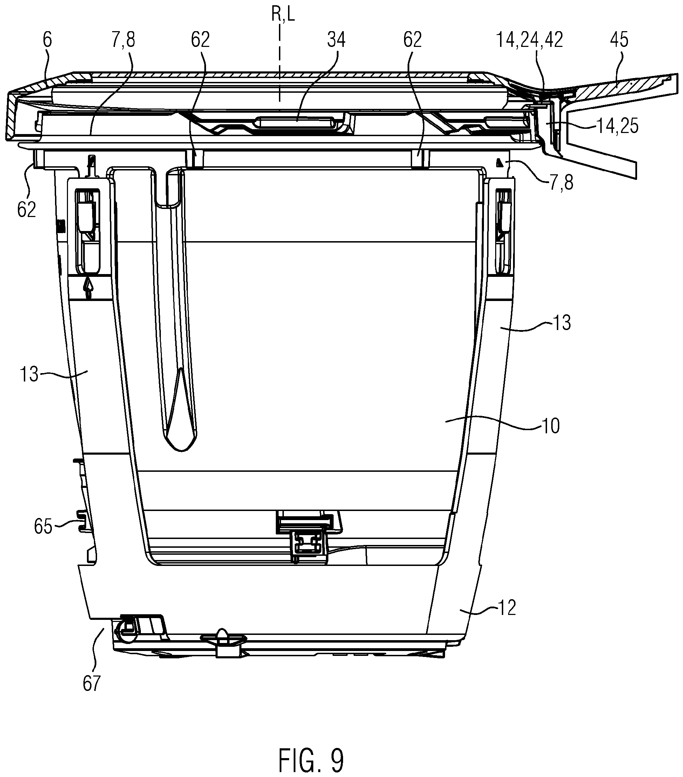

In dem Gehäuse 11 des Zubereitungsgefäßes 1a sind vorteilhaft eine Verriegelungseinheit 27 sowie ein Gegenelement 12, ein Übertragungselement 13 und ein Deckelverriegelungselement 8 einer Deckelverriegelungseinheit 7 um eine Rotationsachse R bzw. eine Längsachse L des Zubereitungsgefäßes 1a rotierbar gehalten. Im montierten Zustand - beispielsweise gemäß Fig. 4 - ist insbesondere das Übertragungselement 13 in einem Zwischenraum zwischen dem Innentopf 10 und dem Gehäuse 11 angeordnet und rotierbar. Das Gegenelement 12, das Übertragungselement 13 und das Deckelverriegelungselement 8 sind derart ausgebildet, dass sie den Innentopf 10 umgeben (siehe insbesondere Fig. 9, in der das Gehäuse 11 weggelassen ist). Fig. 6 zeigt eine perspektivische Ansicht in das Gehäuse 11 ohne Innentopf 10. Fig. 6 zeigt das Zubereitungsgefäß 1a in teilweise montierter Darstellung. Der Innentopf 10 ist entnommen. Die Verriegelungseinheit 27 ist an Stegen 41 auf der Innenseite des Gehäuses 11 zwischen Anschlagspositionen rotierbar.

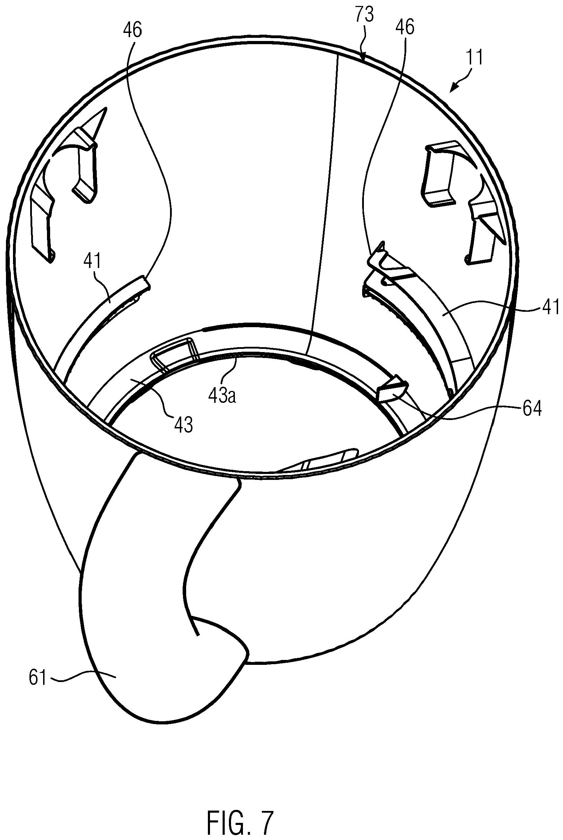

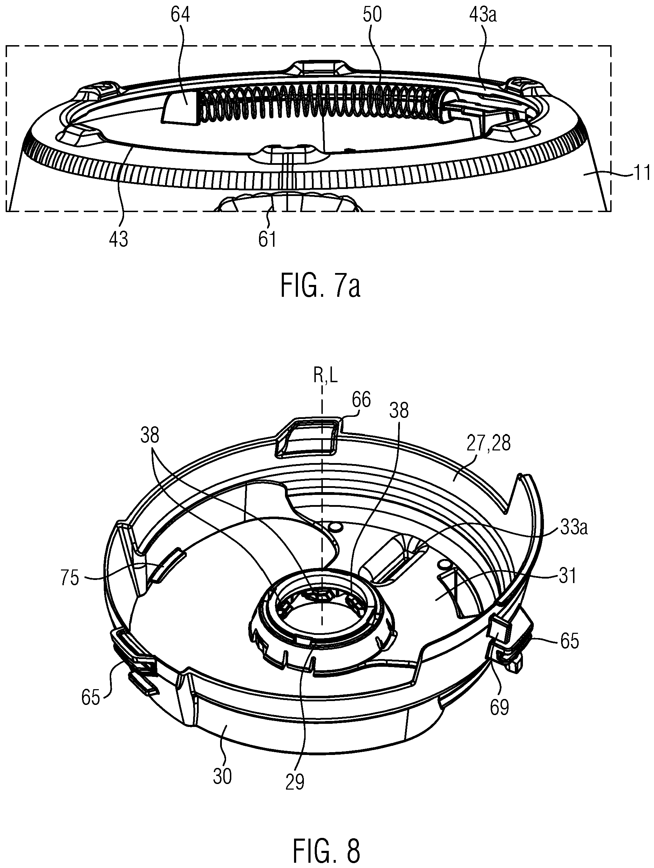

Das Zusammenwirken zwischen den Stegen 41 und beispielsweise einem Führungsstück 66 der Verriegelungseinheit 27 erfolgt vorteilhaft nach dem Nut-Feder-Prinzip. Die Verriegelungseinheit 27 weist zudem Nuten 65 auf, in denen die Stege 41 führbar sind (siehe auch Fig. 8). In dem in Fig. 6 dargestellten Zustand liegt der Träger 28 der Verriegelungseinheit 27 an dem Übertragungselement 13 an, so dass die Verriegelungseinheit 27 bzw. der Träger 28 gemäß Fig. 6 nicht entgegen dem Uhrzeigersinn gedreht werden kann. Ferner kann auch das Übertragungselement 13 nicht rotiert werden, solange die Verriegelungseinheit noch nicht bewegt worden ist. Das Übertragungselement 13 stützt sich in einer Rotationsrichtung gegen den Uhrzeigersinn an einem Endanschlag 46 an einem der Stege 41 ab. Eine Bewegung des Übertragungselements 13 wird aus der in Fig. 6 gezeigten Position - Deckelfreigabeposition - in Rotationsrichtung im Uhrzeigersinn durch einen weiteren Endanschlag 46 an einem Steg 41 begrenzt (siehe Fig. 7). Auf der Innenseite des Gehäuses 11 sind folglich zwei Endanschläge 46 für das Übertragungselement 13 ausgebildet.

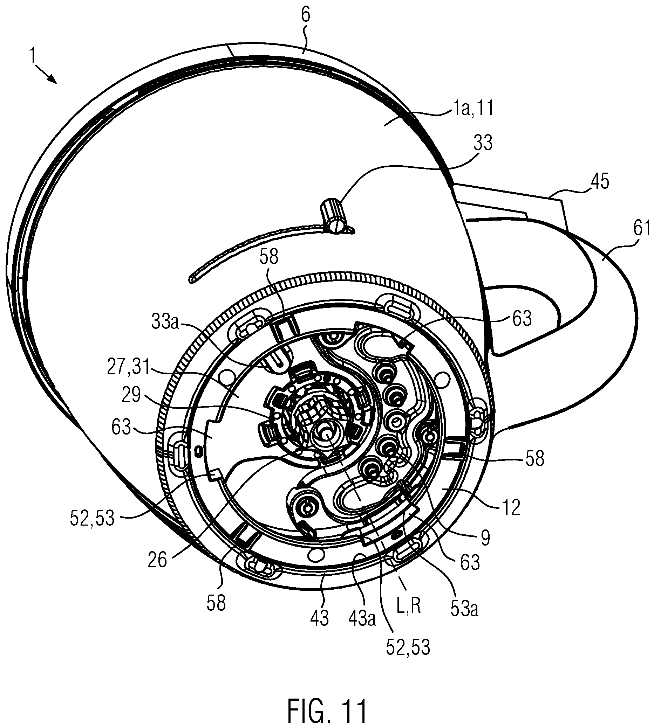

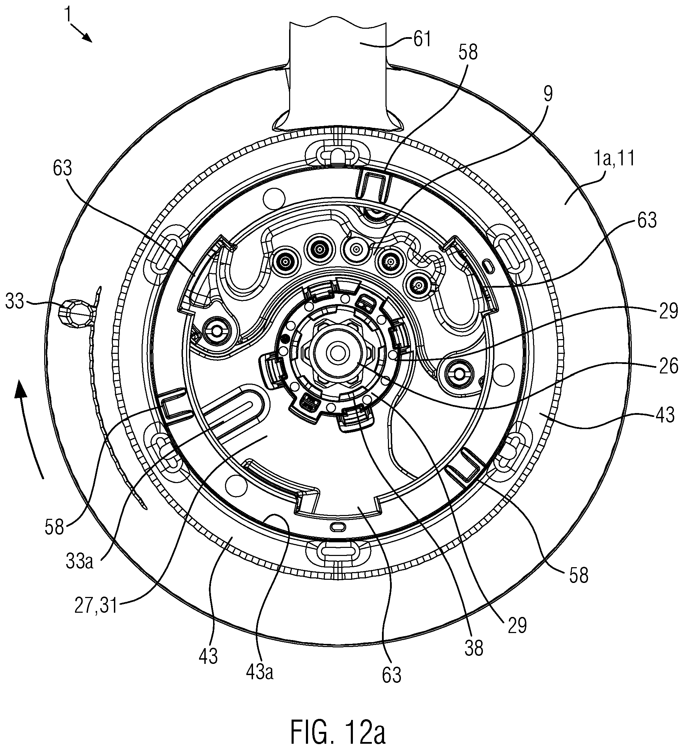

Fig. 7 zeigt eine perspektivische Ansicht in das Gehäuse 11 ohne jegliche Anbauteile, insbesondere folglich nur die Hülle. Das Gehäuse 11 ist bei diesem Ausführungsbeispiel aus einem thermisch isolierenden Material, hier Kunststoff, ausgebildet. Durch den Abstand zwischen Innentopf 10 und Gehäuse 11 wird eine zusätzliche thermische Isolation gewährleistet. Im eingebrachten Zustand ist der Innentopf 10 vollumfänglich und in Bezug auf seine Höhe von dem Gehäuse 11 umgeben (siehe Fig. 4). Auf seiner Innenseite weist das Gehäuse 11 gemäß Fig. 5, 6, 7 und 20 die beschriebenen Stege 41 auf, die zur Lagerung der Verriegelungseinheit 27 dienen. Über die Stege 41 können insbesondere axiale Kräfte in eine Richtung parallel zur Rotationsachse R von der Verriegelungseinheit 27 auf das Gehäuse 11 übertragen werden. Das Gehäuse 11 weist in seinem unteren Bereich einen nach innen ragenden Rand 43 auf, an dessen innenliegender Stirnseite 43a sich das montierte Gegenelement 12 mit Lagerstellen 58 in radialer Richtung abstützt (siehe insbesondere Fig. 11 und 12a bis 12c).

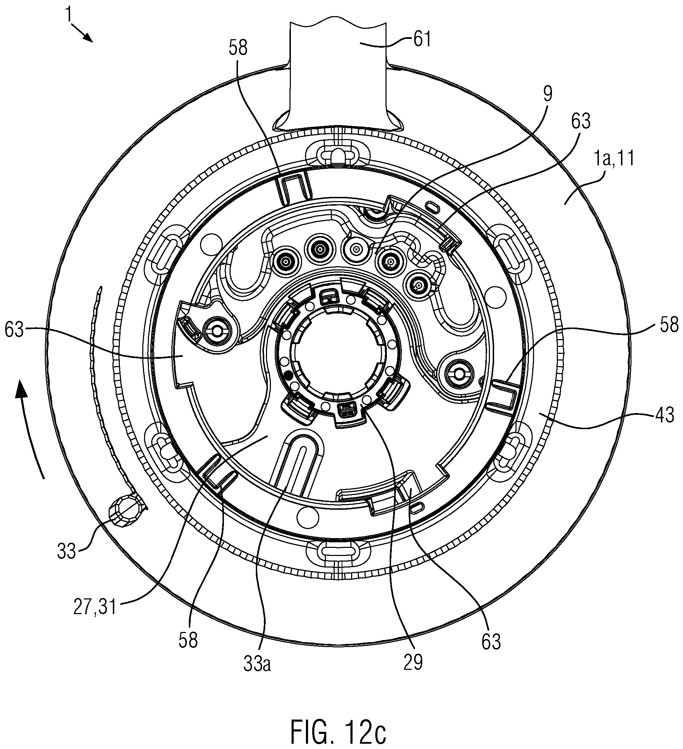

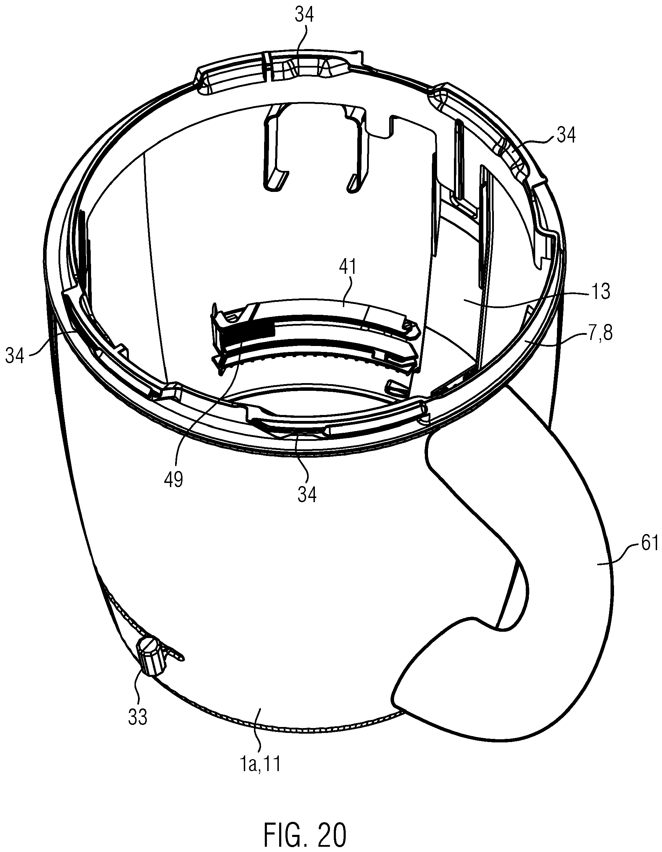

Unterhalb des in Fig. 7 rechts dargestellten Steges 41 ist ein Kanal ausgebildet, in dem gemäß Fig. 20 ein erstes Rückstellelement 49, hier in Form einer Feder, anordenbar ist. Das erste Rückstellelement 49 wirkt im montierten Zustand mit einem Vorsprung 69 an der Verriegelungseinheit 27 (siehe beispielsweise Fig. 8) zusammen, um die Verriegelungseinheit 27 stets in eine Freigabeposition gemäß Fig. 12c zu drängen, damit ein Werkzeughalter 26 einsetzbar ist. Ferner ist an einem unteren Rand 43 ein Stützelement 64 für ein zweites Rückstellmittel 50, hier ebenfalls in Form einer Feder, (siehe insbesondere Fig. 7 und 7a) ausgebildet. In Fig. 7a ist das zweite Rückstellmittel 50 nur zu Verständniszwecken dargestellt. Das Rückstellmittel 50 ist im montierten Zustand in einer Aufnahme 67 an dem Verriegelungselement 27 gehalten (siehe Fig. 8, 9, 10a und 10b).

Zur Montage des Innentopfes 10 in dem Gehäuse 11 wird zunächst der Innentopf 10 in das Gehäuse 11 eingebracht - siehe Fig. 5. Anschließend wird ein Werkzeughalter 26 mit montiertem Werkzeug 26a, hier einem Schneid- und Rührwerkzeug, durch den Innentopf 10 und durch einen Verriegelungsring 29 eines Trägers 28 der Verriegelungseinheit 27 hindurchgesteckt. Der Verriegelungsring 29 weist beispielsweise einen Innendurchmesser zwischen 29,5 mm und 35,5 mm, insbesondere von etwa 32,5 mm, auf. Der Verriegelungsring 29 ist mit einem Haltesteg 31 mit einem Außenring 30 des Trägers 28 verbunden. Ferner weist der Träger 28 auf einer Innenseite eine Gegenrippe 75 (siehe insbesondere Fig. 8) auf, die - wie nachfolgend beschrieben wird - zum Zusammenwirken mit einer Rippe 74 am Innentopf 10 (siehe Fig. 5) ausgebildet ist. Fig. 12c zeigt beispielhaft eine Ansicht des Zubereitungsgefäßes 1a von unten mit eingebrachtem Innentopf 10, jedoch noch ohne Werkzeughalter 26. Eine elektrische Schnittstelle 9 des Innentopfes 10 ist von der Unterseite des Zubereitungsgefäßes 1a zugänglich, so dass diese mit einer elektrischen Gegenschnittstelle 32 zusammenwirken kann, wenn das Zubereitungsgefäß 1a in einem Aufnahmebereich 2 einer Küchengerätebasis 3 angeordnet ist (siehe Fig. 1, 16 und 17).

Der Innentopf 10 weist, insbesondere gemäß Fig. 5, insbesondere an einem Fußbereich, mindestens eine Rippe 74 auf. Die Rippe 74 ist orthogonal zu einer Rotationsachse des Werkzeugs 26a für den Innentopf 10 ausgerichtet. Vorzugsweise weist das Gehäuse 11, insbesondere die Verriegelungseinheit 27, mindestens eine Gegenrippe 75 auf (siehe Fig. 6 und Fig. 8). Die Gegenrippe 75 ist in der Verriegelungsposition der Verriegelungseinheit 27 derart angeordnet, dass sie mit der Rippe 74 am Innentopf 10 kollidiert, wenn versucht wird, den Innentopf 10 in das Gehäuse 11 einzusetzen. Dadurch wird verhindert, dass der Innentopf 10 in das Gehäuse 11 einsetzbar ist, wenn das Gehäuse 11 - ohne Innentopf 10 - auf einer Küchengerätebasis 3 angeordnet ist, insbesondere wird also verhindert, dass der Innentopf 10 erst nachträglich eingesetzt werden kann. Wenn das Gehäuse 11 - alleine - auf der Küchengerätebasis 3 angeordnet ist, verhindert ein Zusammenwirken mit der Betätigungseinheit 2a, dass eine Entriegelung der Verriegelungseinheit 27 erfolgen kann. In der Entriegelungsposition der Verriegelungseinheit 27 ist der Innentopf 10 in das Gehäuse 11 einsetzbar.

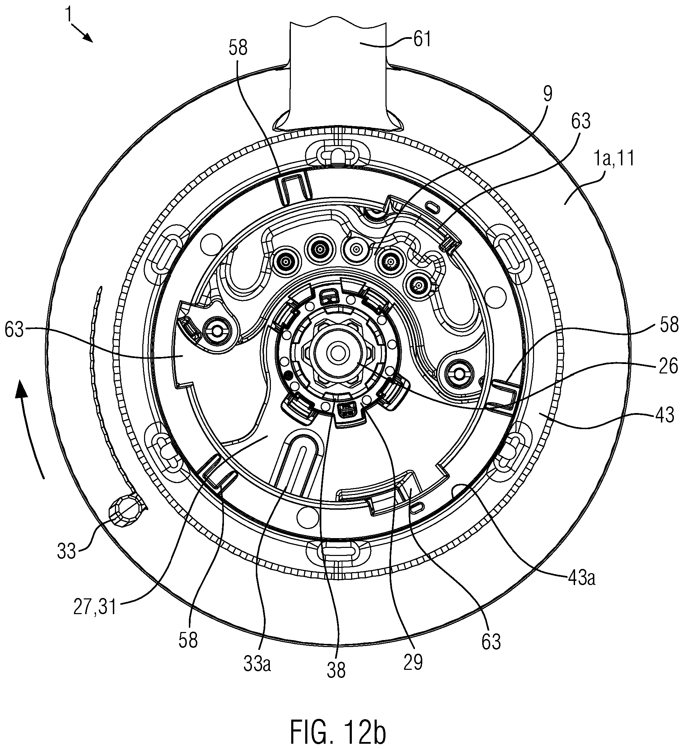

In Fig. 12c befindet sich die Verriegelungseinheit 27 in einer ersten Position - Freigabeposition -, in der der Werkzeughalter 26 den Verriegelungsring 29 durchtreten kann. Die Verriegelungseinheit 27 weist einen Betätigungsgriff 33 auf, mit dem sie von der ersten Position gemäß Fig. 12c und 12b - Freigabeposition - in eine zweite Position gemäß Fig. 12a - Verriegelungsposition - rotierbar ist. Alternativ oder zusätzlich zum ersten Betätigungsgriff 33 weist die Verriegelungseinheit 27 einen alternativen Betätigungsgriff 33a auf, der von der Unterseite des Zubereitungsgefäßes 1a zugänglich ist.

Gemäß Fig. 12b ist der Werkzeughalter 26 eingebracht, jedoch noch nicht mit der Verriegelungseinheit 27 verriegelt. Das Verriegeln erfolgt dadurch, dass der Betätigungsgriff 33 - oder der alternative Betätigungsgriff 33a - durch einen Benutzer in die zweite Position gemäß Fig. 12a verbracht wird. Der Verriegelungsring 29, der von dem Werkzeughalter 26 durchtretbar ist, weist gemäß Fig. 8 und Fig. 12a bis 12c eine Mehrzahl von Haken 38 an seinem Innenumfang auf, die zum formschlüssigen Zusammenwirken mit dem Verriegelungsring 29 ausgebildet sind. Werden die Verriegelungseinheit 27 und damit auch die Haken 38 am Verriegelungsring 29 rotiert, erfolgt eine formschlüssige Verriegelung des Werkzeughalters 26 mit der Verriegelungseinheit 27 durch die Haken 38. Dadurch, dass der Werkzeughalter 26 auch den Innentopf 10 durchtritt, ist durch die Verriegelung des Werkzeughalters 26 auch der Innentopf 10 mit dem Gehäuse 11 verriegelt. Zu Reinigungszwecken kann der Werkzeughalter 26 mit dem Werkzeug 26a und der Innentopf 10 in umgekehrter Reihenfolge entnommen werden, insbesondere indem eine Entriegelung durch Verschieben des Betätigungsgriffs 33 aus der zweiten Position gemäß Fig. 12a in die erste Position gemäß Fig. 12b erfolgt.

Die Verriegelungseinheit 27 weist ein erstes Rückstellmittel 49 (siehe Fig. 20) in Form einer Rückstellfeder auf. Das erste Rückstellmittel 49 wirkt zwischen dem Gehäuse 11 und der Verriegelungseinheit 27, um die Verriegelungseinheit 27 zumindest bei nicht eingesetztem Werkzeughalter 26 in Richtung einer Freigabeposition für den Werkzeughalter 26 gemäß Fig. 12c zu drängen. Dadurch befindet sich auch der Betätigungsgriff 33 stets in der Position gemäß Fig. 12c. Zudem ist ein zweites Rückstellmittel 50, insbesondere ebenfalls in Form einer Rückstellfeder, vorgesehen, das zwischen der Verriegelungseinheit 27 und dem Gegenelement 12 wirkt. Das zweite Rückstellmittel 50 drängt das Gegenelement 12 in Richtung einer zweiten Position, die hier der Verriegelungsposition entspricht, so dass das Zubereitungsgefäß 1a nicht im Aufnahmebereich 2 einer Küchengerätebasis 3 anordenbar ist, wenn kein Werkzeughalter 26 vorhanden oder ein vorhandener Werkzeughalter 26 nicht - wie in Fig. 12a dargestellt - verriegelt ist. Im in Fig. 12b dargestellten Zustand ist ein Aufbringen in den Aufnahmebereich 2 nicht möglich.

Das Deckelverriegelungselement 8, das Übertragungselement 13 und das Gegenelement 12 sind gemäß Fig. 6, Fig. 9, Fig. 10a und Fig. 10b drehfest miteinander verbunden, so dass sie um eine Rotationsachse R innerhalb des Gehäuses 11 des Zubereitungsgefäßes 1a rotierbar lagerbar sind (siehe insbesondere Fig. 6 und Fig. 9). Das Deckelverriegelungselement 8 stützt sich auf einer Innenfläche des Gehäuses 11 bzw. der Hülle an einem oberen Rand 73 mit einer Mehrzahl radialer Lagerstellen 62 ab (siehe Fig. 6, 7 und 10b). Die Einheit aus Deckelverriegelungselement 8, Übertragungselement 13 und Gegenelement 12 ist insbesondere über die Lagerstellen 62 des Deckelverriegelungselements 8 und die Lagerstellen 58 des Gegenelements 12 in dem Gehäuse 11 gelagert.

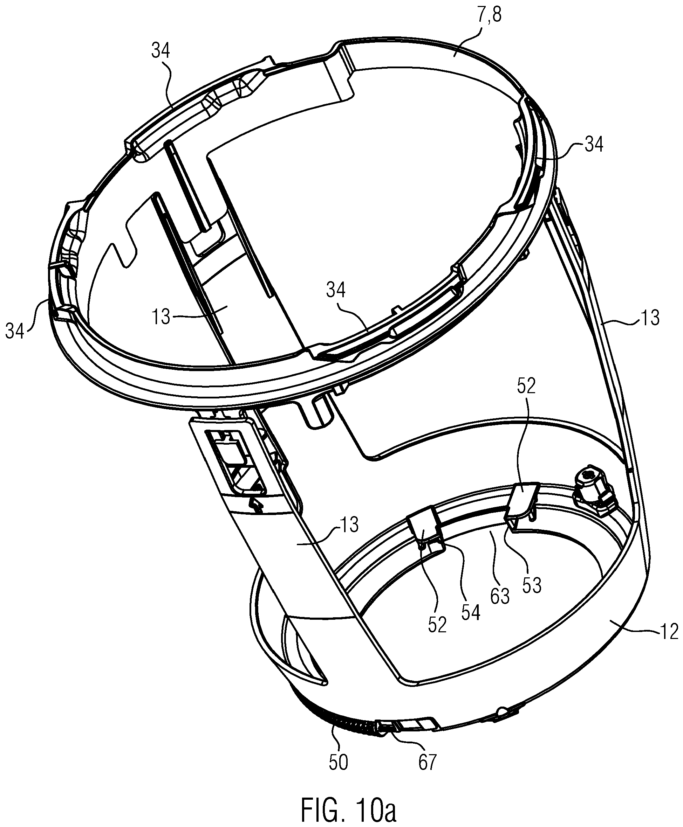

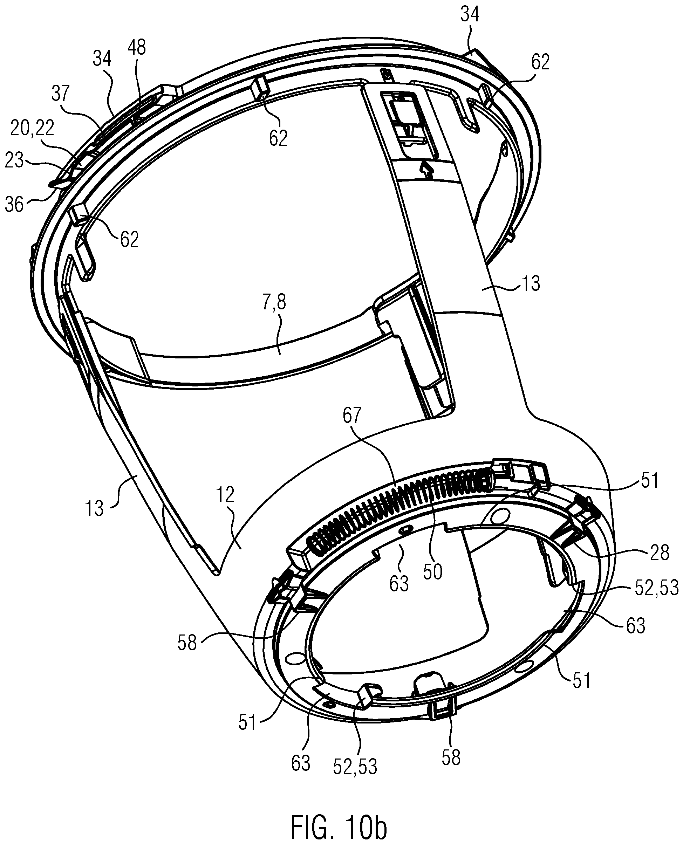

Bei diesem Ausführungsbeispiel sind - wie insbesondere in Fig. 9 und 10a, 10b dargestellt - das Gegenelement 12 und das Übertragungselement 13 einstückig ausgebildet, wobei die Einheit aus Gegenelement 12 und Übertragungselement 13 formschlüssig mit dem Deckelverriegelungselement 8 verbunden ist. Das Übertragungselement 13 weist drei sich im Wesentlichen senkrecht erstreckende Arme auf, an deren Enden jeweils ein Verbinden mit dem
Deckelverriegelungselement 8 erfolgt ist.

Im montierten Zustand, insbesondere gemäß Fig. 5, 6 und 9, ist das Gegenelement 12 zwischen einer ersten Position und einer zweiten Position rotierbar. Dadurch, dass das Deckelverriegelungselement 8 und das Gegenelement 12 über das Übertragungselement 13 drehfest miteinander verbunden sind, befindet sich das Deckelverriegelungselement 8 in der Deckelfreigabeposition, wenn sich das Gegenelement 12 in der ersten Position befindet, und befindet sich das Deckelverriegelungselement 8 in der Deckelverriegelungsposition, wenn sich das Gegenelement 12 in der zweiten Position befindet. Durch dieses Zusammenwirken kann durch eine Rotation des Gegenelements 12, insbesondere bewirkt durch die Küchengerätebasis 3, eine nachfolgend zu Fig. 2a bis 2c beschriebene, automatische Ver- und Entriegelung des Deckels 6 bewirkt werden. Das Gegenelement 12 ist zum Zusammenwirken mit der Küchengerätebasis 3, insbesondere mit der Betätigungseinheit 2a im Aufnahmebereich 2 ausgebildet.

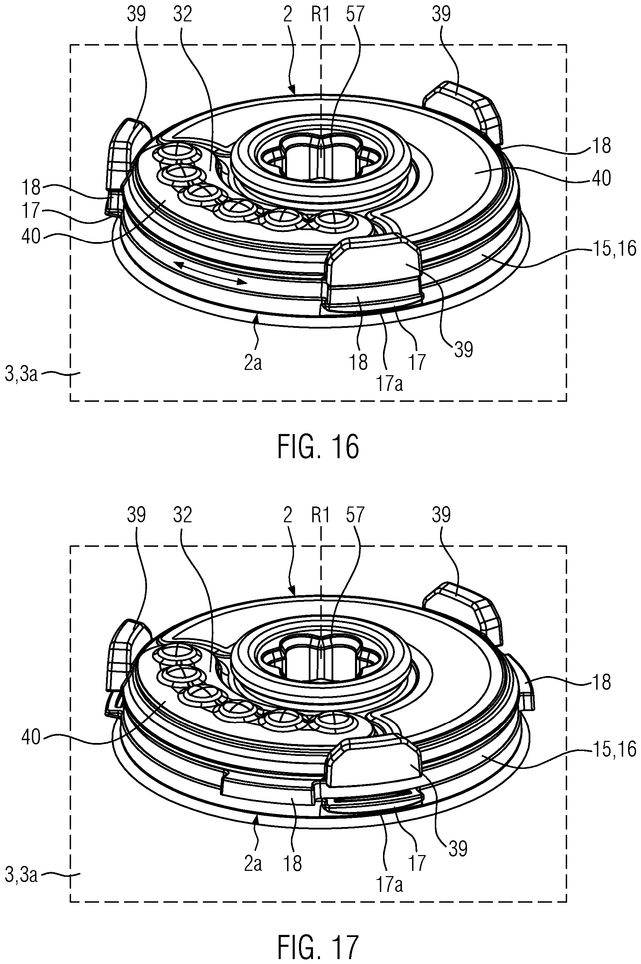

Das Zubereitungsmodul 1, hier das Zubereitungsgefäß 1a mit dem Deckel 6, ist in den Aufnahmebereich 2 einer Küchengerätebasis 3, wie in Fig. 1 dargestellt, einbringbar. Insbesondere ist das Zubereitungsgefäß 1a mit seinem Fußbereich - mit und ohne Deckel 6 - in dem Aufnahmebereich 2 anordenbar. Fig. 16, Fig. 17 und Fig. 21 zeigen eine Detailansicht einer Oberseite 3a einer Küchengerätebasis 3 mit Aufnahmebereich 2. Der Aufnahmebereich 2 weist eine Betätigungseinheit 2a mit einer Antriebseinheit 15, ein um eine Rotationsachse R1 rotierbar gehaltenes Betätigungselement 16 und drei ortsfeste Halteelemente 17 auf. Die Halteelemente 17 sind in einem Winkel von etwa 120° zueinander angeordnet und weisen jeweils eine konvex gewölbte Haltefläche 17a auf, die in Richtung der Oberseite 3a orientiert ist.

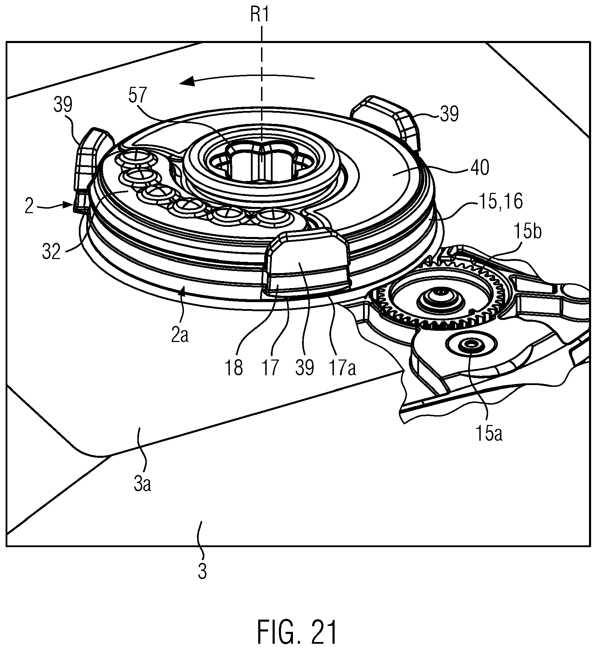

Um das Betätigungselement 16 bewegen zu können, weist die Antriebseinheit 15, insbesondere gemäß Fig. 21, mindestens einen Motor 15a und mindestens ein Zahnrad 15b auf. Fig. 21 zeigt ein Ausführungsbeispiel einer Küchengerätebasis 3 mit teilweisem Ausschnitt. Das Zahnrad 15b steht mit dem Betätigungselement 16 in formschlüssigem Eingriff, um das Betätigungselement 16 zu rotieren. Beispielsweise weist das Betätigungselement 16 eine Verzahnung auf, in die das Zahnrad 15b eingreift - nicht dargestellt. Der Motor 15a, von dem nur das Wellenende dargestellt ist, ist unmittelbar mit dem Zahnrad 15b verbunden.

Oberhalb der Halteelemente 17 ist das Betätigungselement 16 rotierbar angeordnet. Das Betätigungselement 16 weist drei Mitnehmerelemente 18 auf, die sich in der in Fig. 16 dargestellten, ersten Position in einer Richtung parallel zur Rotationsachse R1 des Betätigungselements 16 vollständig überdecken. Oberhalb der Mitnehmerelemente 18 ist jeweils ein Einführelement 39 angeordnet, das wie das Halteelement 17 ortsfest ist. Gemäß Fig. 16 ist das Einführelement 39 in der ersten Position ebenfalls in einer Richtung parallel zur Rotationsachse R1 in vollständiger Überdeckung mit dem Mitnehmerelement 18 bzw. dem Halteelement 17. Die elektrischen Kontakte der Gegenschnittstelle 32, die zum Zusammenwirken mit der elektrischen Schnittstelle 9 des Zubereitungsgefäßes, z. B. gemäß Fig. 11, ausgebildet ist, sind mit einer Kontaktabdeckung 40 abgedeckt. Die Betätigungseinheit 2a umgibt eine zentral angeordnete Werkzeugschnittstelle 57, die zum formschlüssigen Zusammenwirken mit dem Werkzeughalter 26 (siehe Fig. 11) ausgebildet ist und mit diesem zusammengefügt wird, wenn das Zubereitungsgefäß 1a im Aufnahmebereich 2 angeordnet wird.

Die Halteelemente 17 und/oder die Mitnehmerelemente 18 und/oder die Einführelemente 39 weisen z. B. eine Breite - in Umfangsrichtung - zwischen etwa 23 mm und 27 mm auf. Insbesondere beträgt die Breite etwa 25 mm. Die Mitnehmerelemente 18 haben - in einer Richtung parallel zur Rotationsachse R - vorzugsweise eine Höhe zwischen 3,5 mm und 5,5 mm. Insbesondere beträgt die Höhe etwa 4,5 mm. Die Betätigungseinheit 2a hat ausgehend von der Oberseite 3a der Küchengerätebasis 3 insbesondere etwa eine Höhe - bis zur Oberseite der Kontaktabdeckung 40 - von etwa 16 mm bis 20 mm. Insbesondere beträgt die Höhe etwa 18 mm. Die Einführelemente 39 haben ausgehend von der Oberseite 3a der Küchengerätebasis 3 bevorzugt etwa eine Höhe zwischen 21 mm und 25 mm. Insbesondere beträgt die Höhe etwa 23 mm. Die Betätigungseinheit 2a hat - ausgehend von der Rotationsachse R1 - insbesondere einen Radius von 45 mm bis 55 mm. Insbesondere beträgt der Radius etwa 50 mm. Gleiches gilt für das Betätigungselement 16 und die Kontaktabdeckung 40. Die Einführelemente 39 und/oder die Mitnehmerelemente und/oder die Halteelemente 17 weisen - ausgehend von der Rotationsachse R1 - vorzugsweise einen Radius von etwa 49 mm bis 61 mm auf. Insbesondere beträgt der Radius etwa 53,5 mm.

Um eine mechanische Funktion an dem Zubereitungsgefäß 1a zu bewirken, ist das Betätigungselement 16 mit den Mitnehmerelementen 18 von der Antriebseinheit 15 zumindest in eine zweite Position gemäß Fig. 17 rotierbar. In der zweiten Position sind die Mitnehmerelemente 18 aus der Überdeckung in einer Richtung parallel zur Rotationsachse R1 mit den Halteelementen 17 und den Einführelementen 39 herausgeschwenkt.

Die Betätigungseinheit 2a steht auf der Oberseite 3a der Küchengerätebasis 3 hervor, so dass sie zumindest teilweise in eine Unterseite des Zubereitungsgefäßes 1a eintreten kann, wenn das Zubereitungsgefäß 1a in den Aufnahmebereich 2 eingesetzt wird.

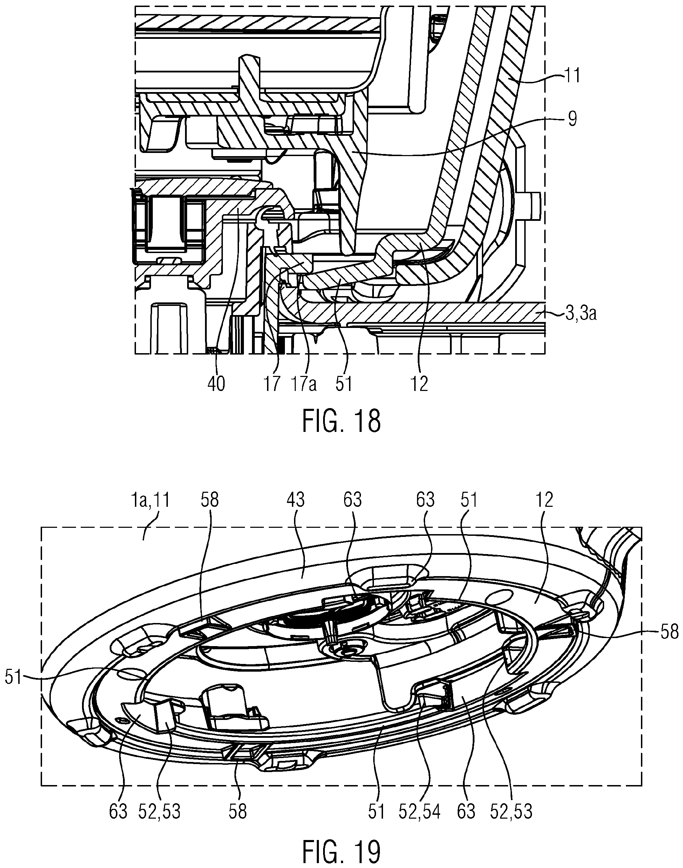

Im aufgebrachten Zustand des Zubereitungsgefäßes 1a im Aufnahmebereich 2 einer Küchengerätebasis 3, beispielsweise gemäß Fig. 11, 16, 17, 18 und 19, durchtreten jeweils ein Einführelement 39, ein Mitnehmerelement 18 und ein Halteelement 17 das Gegenelement 12 jeweils durch eine der Ausnehmungen 63. Die Ausnehmungen 63 sind so dimensioniert, dass ein Eintreten nur erfolgen kann, wenn sich das Einführelement 39, das Mitnehmerelement 18 und das Halteelement 17 in einer Richtung parallel zur Rotationsachse R1 vollständig überdecken. Die Ausnehmungen haben insbesondere eine Breite - in Umfangsrichtung - von etwa 24 mm bis 28 mm, insbesondere von etwa 26 mm. Ferner tritt die Betätigungseinheit 2a durch eine zentrale Öffnung von unten in das Gegenelement 12 hinein (siehe Fig. 10b und Fig. 19). Die zentrale Öffnung hat einen Radius von etwa 47 mm bis 57 mm, insbesondere von etwa 52 mm.

Die elektrische Gegenschnittstelle 32 der Küchengerätebasis 3 wird beim Einbringen in den Aufnahmebereich 2 mit der elektrischen Schnittstelle 9 des Zubereitungsgefäßes 1a, beispielsweise gemäß Fig. 11, kontaktiert. Ferner wird auch die Werkzeugschnittstelle 57 des Aufnahmebereiches 2 mit der korrespondierenden Schnittstelle des Werkzeughalters 26 (siehe insbesondere Fig. 11) verbunden.

Die Anzeige- und Eingabevorrichtung 3b ist an einer Gerätevorderseite der Küchengerätebasis 3 angeordnet, gegenüberliegend befindet sich eine Geräterückseite (siehe Fig. 1). Wenn das Zubereitungsgefäß 1a im Aufnahmebereich 2 angeordnet ist, ist der Handgriff 61 des Zubereitungsgefäßes 1a in Richtung der Anzeige- und Eingabevorrichtung 3b ausgerichtet. Die Betätigungseinheit 2a ist ferner so ausgerichtet, dass ein Einführelement 30 der Betätigungseinheit 2a etwa auf einer gedachten Linie mit dem Handgriff 61 ausgerichtet ist. Das Einführelement 39 ist in Richtung der Geräterückseite orientiert. Die Betätigungseinheit 2a ist im Wesentlichen kreisförmig ausgebildet. Ausgehend von dem Einführelement 39, das auf einer Linie mit dem Handgriff bzw. einer Mittelachse der Anzeige- und Eingabevorrichtung 3b ausgerichtet ist, sind die zwei weiteren Einführelemente 39 auf dem Umfang gleichmäßig verteilt. Auf dem Umfang gegenüberliegend zu dem vorbeschriebenen Einführelement 39 ist die elektrische Gegenschnittstelle 32 angeordnet (siehe Fig. 16 und 17). Die elektrische Gegenschnittstelle 32 ist auf dem Umfang in Richtung des Handgriffs 61 bzw. der Gerätevorderseite orientiert. Diese Anordnung unterstützt das Positionieren des Zubereitungsmoduls 1, wenn dieses z. B. leicht nach vorne gekippt oder nach hinten gekippt aufgesetzt wird. Entweder führt das hintere Einführelement 39 (das auf der gedachten Linie angeordnete, auf der Rückseite der Küchengerätebasis 3 zugewandten Seite) oder die beiden vorderen Einführelemente 39 (die seitlich von der elektrischen Gegenschnittstelle 32 angeordneten), die die grobe vordere Ausrichtung im Hinblick auf die Kontakte der Gegenschnittstelle 32 unterstützen.

Das Rotieren der Mitnehmerelemente 18 zwischen einer ersten Position gemäß Fig. 16 und der zweiten Position gemäß Fig. 17 relativ zu den Halteelementen 17 und den Einführelementen 39 wird vorteilhaft verwendet, um eine Rotation des Gegenelementes 12 zu bewirken, z. B. um eine mechanische Funktion innerhalb des Zubereitungsgefäßes 1a zu bewirken, insbesondere um das Zubereitungsgefäß 1a mit der Küchengerätebasis 3 zu verriegeln. Das Rotieren erfolgt vorzugsweise in einem Winkel von etwa 30°, wobei vorzugsweise zunächst ein Winkel von etwa 32° angefahren wird und anschließend ein Rückstellen von etwa 2° erfolgt, um Spannungen in den bewegten Bauteilen zu reduzieren.

Bei einer Rotation des Betätigungselementes 16 werden die Mitnehmerelemente 18 rotiert, die jeweils mit einer Mitnehmergegenfläche 53 des Mitnehmergegenelementes 52 des Gegenelements 12 zusammenwirken (siehe Fig. 10a, 10b und Fig. 19) und dadurch auch eine Rotation des Gegenelementes 12 in dem Zwischenraum zwischen Innentopf 10 und Gehäuse 11 bewirken. Das Gegenelement 12 weist eine Mehrzahl in Richtung der Rotationsachse R1 vorstehender Wirkabschnitte 51 auf, die jeweils ein Mitnehmergegenelement 52 mit einer Mitnehmergegenfläche 53 aufweisen. Wenn das Zubereitungsgefäß 1a in den Aufnahmebereich 2 eingebracht ist, sind die Rotationsachsen R, R1 sowie die Längsachse L vorzugsweise koaxial. Die Mitnehmergegenfläche 53 ist entlang einer Richtung parallel zur Rotationsachse R1 versetzt zu dem Wirkabschnitt 51 angeordnet, befindet sich nämlich oberhalb des Wirkabschnitts 51. Durch die Rotation des Gegenelementes 12 werden die Wirkabschnitte 51 des Gegenelementes 12 unter die konkav gewölbten Halteelemente 17 rotiert, wodurch das Zubereitungsgefäß 1a mit der Küchengerätebasis 3 verriegelt wird. Der verriegelte Zustand ist im Schnitt in Fig. 18 dargestellt.

Da das Gegenelement 12 drehfest um die Rotationsachse R mit dem Übertragungselement 13 und dem Deckelverriegelungselement 8 verbunden ist, wird bei einer Bewegung des Gegenelementes 12 gleichzeitig der Deckel 6 mit dem Zubereitungsgefäß 1a ver- oder entriegelt, indem die Verriegelungskulissen 34 - wie nachstehend zu Fig. 2a bis 2c beschrieben - mit Nocken 35 an der Deckelunterseite des Deckels 6 zusammenwirken.

Bei dem dargestellten Ausführungsbeispiel erfolgt folglich eine vorteilhafte Verriegelung des Zubereitungsgefäßes 1a mit der Küchengerätebasis 3 gleichzeitig mit einer Verriegelung des Deckels 6 mit dem Zubereitungsgefäß 1a. Ein Entriegeln des Zubereitungsgefäßes 1a von der Küchengerätebasis 3 erfolgt in umgekehrter Reihenfolge, nämlich indem die Mitnehmerelemente 18 in entgegengesetzter Richtung mit dem Mitnehmergegenelement 52 des Gegenelementes 12, insbesondere mit einer Rückstellfläche 54, zusammenwirken und das Gegenelement 12 so weit in entgegengesetzter Richtung rotieren, bis sich die Wirkabschnitte 51 des Gegenelementes 12 in einer Richtung parallel zur Rotationsachse R nicht mehr mit den Halteelementen 17 überdecken, so dass die Halteelemente 17, die Mitnehmerelemente 18 und die Einführelemente 39 bei einem Abheben des Zubereitungsgefäßes 1a aus dem Aufnahmebereich 2 wieder durch die Ausnehmungen 63 nach außen treten können (siehe insbesondere Fig. 18).

Gleichzeitig wird durch das Rotieren des Gegenelementes 12 in entgegengesetzter Richtung über das Übertragungselement 13 auch das Deckelverriegelungselement 8 in entgegengesetzter Richtung, nämlich in Richtung der Deckelfreigabeposition, rotiert, so dass der Deckel 6 in der Deckelfreigabeposition entnehmbar ist.

Liegt während des Rotierens in Richtung der Deckelfreigabeposition allerdings ein Druck im Zubereitungsraum 5 an oder zieht der Benutzer am Deckel 6, gelangt ein Sperrmittel 19 in die Sperrposition - wie nachfolgend für Fig. 2a bis 2c beschrieben - und verhindert damit ein weiteres Rotieren des Deckelverriegelungselementes 8, aber auch des Gegenelementes 12. Diese Blockierung wird von der Antriebseinheit 15 bzw. von der Steuereinheit anhand einer gesteigerten Stromstärke erkannt und das Rotieren gestoppt.

Bevorzugt ist vorgesehen, dass dann zunächst wieder eine Rotation in entgegengesetzter Richtung erfolgt, nämlich die Wirkabschnitte 51 wieder unter die Haltelemente 17 und die Verriegelungskulissen 34 wieder in die Deckelverriegelungsposition gedreht werden. Erst nach Ablauf einer vorbestimmten Zeit oder durch erneute Veranlassung eines Benutzers wird ein erneuter Vorgang der Entriegelung bzw. der Deckelfreigabe gestartet.

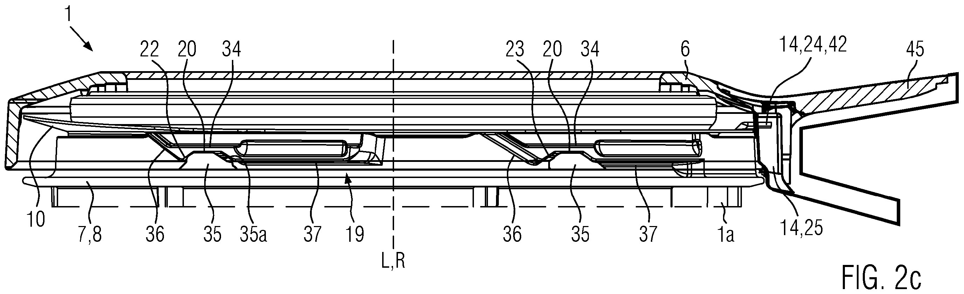

Fig. 2a bis Fig. 2c zeigen einen oberen Teil eines Zubereitungsmoduls 1, nämlich einen auf ein Zubereitungsgefäß 1a aufgebrachten Deckel 6 in unterschiedlichen Verriegelungszuständen. Der Deckel 6 weist beispielsweise eine Gesamthöhe - in einer Richtung parallel zur Längsachse L - zwischen etwa 24 mm und 28 mm auf. Insbesondere beträgt die Gesamthöhe etwa 26 mm. An einem oberen Rand des Zubereitungsgefäßes 1a ist die Deckelverriegelungseinheit 7 angeordnet, die mit dem Deckel 6 interagieren kann. Fig. 2a zeigt die Deckelverriegelungseinheit 7 in der Deckelfreigabeposition, Fig. 2b zeigt die Deckelverriegelungseinheit 7 in der Deckelverriegelungsposition und Fig. 2c zeigt die Deckelverriegelungseinheit 7 in einer Position zwischen der Deckelverriegelungsposition und der Deckelfreigabeposition, in der sich ein Sperrmittel 19 der Deckelverriegelungseinheit 7 in einer Sperrposition befindet. Dadurch, dass sich das Sperrmittel 19 in der Sperrposition befindet, ist ein Bewegen der Deckelverriegelungseinheit 7 in Richtung der Deckelfreigabeposition gemäß Fig. 2a verhindert.

Das Sperrmittel 19 befindet sich gemäß Fig. 2c in der Sperrposition, da eine Kraft parallel zu einer Längsachse L des Zubereitungsgefäßes 1a von dem Zubereitungsgefäß 1a weg auf den Deckel 6 wirkt. Diese Kraft wird entweder dadurch verursacht, dass eine Kraft aus dem Zubereitungsraum 5 auf den Deckel 6 wirkt, beispielsweise ausgehend von einer rotierenden Trombe von Speisen oder einem in dem Zubereitungsraum 5 vorherrschenden Druck, oder dadurch, dass ein Benutzer versucht, den Deckel 6 vom Zubereitungsgefäß 1a abzuheben.

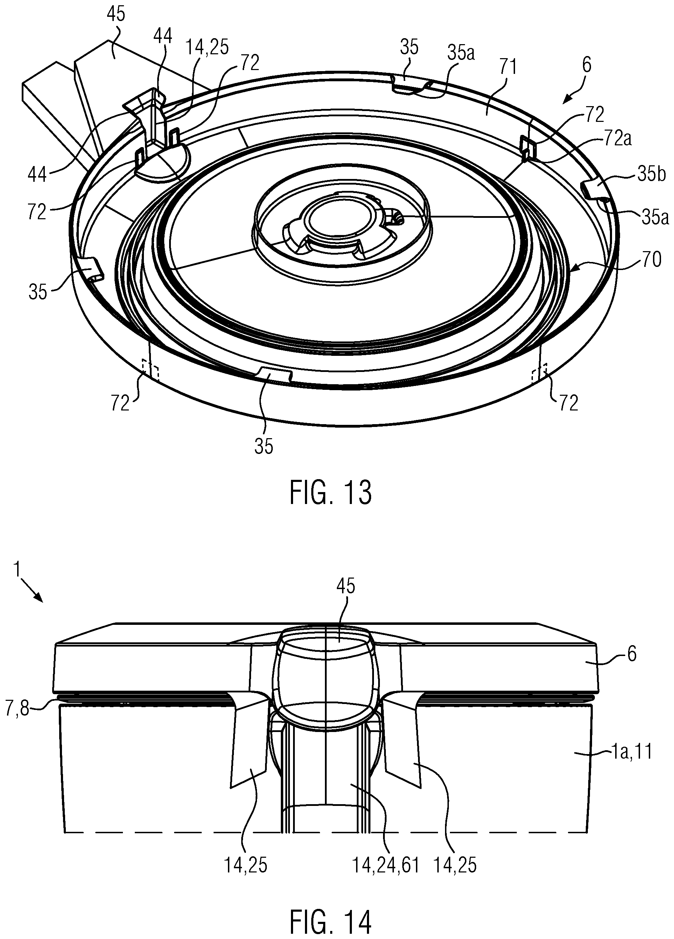

Gemäß Fig. 2c ist die Deckelverriegelungseinheit 7 zumindest teilweise in Richtung der Deckelfreigabeposition bewegt, wenn sich das Sperrmittel 19 in der dargestellten Sperrposition befindet. Das Sperrmittel 19 gelangt durch eine translatorische Bewegung des Deckels 6, insbesondere in einer Richtung parallel zur Längsachse L des Zubereitungsgefäßes 1a, in die Sperrposition (siehe Fig. 2c). Das Sperrmittel 19 weist eine Mehrzahl erster Sperrflächen 20, eine Mehrzahl zweiter Sperrflächen 23 und eine Mehrzahl von Sperrelementen 21 auf. Eine translatorische Bewegung des Deckels 6 parallel zur Längsachse L wird durch ein Anliegen der Sperrelemente 21 an der jeweiligen ersten Sperrfläche 20 begrenzt. Die Sperrelemente 21 sind hier als radial nach innen vorstehende Nocken 35 am Deckel 6 ausgebildet (siehe auch Fig. 13), die ebenfalls zur Verriegelung des Deckels 6 dienen.

Die Nocken 35 haben beispielsweise eine Breite von etwa 10 mm bis 14 mm, insbesondere von etwa 12 mm, und/oder eine Tiefe - in radialer Richtung - zwischen 5 mm und 7 mm, insbesondere von etwa 6 mm, und/oder eine Höhe - in einer Richtung parallel zur Rotationsachse R - zwischen 3,5 mm und 5,5 mm, insbesondere von etwa 4,5 mm.

Die ersten Sperrflächen 20 und die zweiten Sperrflächen 23 sind Flächen in einer Ausnehmung 22 in einer Verriegelungskulisse 34, die an einem Deckelverriegelungselement 8 der Deckelverriegelungseinheit 7 ausgebildet ist. Die ersten Sperrflächen 20 weisen beispielsweise eine Breite zwischen 5,5 mm und 7,5 mm, insbesondere von etwa 6,5 mm, auf. Die Verriegelungskulisse 34 hat vorzugsweise eine Höhe in einer Richtung parallel zur Rotationsachse R von etwa 6,6 mm bis 8,6 mm, insbesondere von etwa 7,6 mm. Das Deckelverriegelungselement 8 ist um eine Rotationsachse R, die beispielsweise mit der Längsachse L des Zubereitungsgefäßes 1 zusammenfällt, zumindest zwischen einer Deckelfreigabeposition und einer Deckelverriegelungsposition rotierbar gelagert. Das Deckelverriegelungselement 8 ist im Wesentlichen ringförmig ausgebildet und ist sowohl relativ zum Deckel 6 als auch relativ zum Zubereitungsraum 5 rotierbar (siehe insbesondere Fig. 2a und Fig. 2b). Damit die Nocken 35 des Deckels 6 gemäß den Fig. 2a bis 2c mit der Deckelverriegelungseinheit 7 bzw. dem Deckelverriegelungselement 8 zusammenwirken können, weist der Innentopf 10 gemäß Fig. 4 und 5 eine der Anzahl der Nocken 35 entsprechende Anzahl an Aussparungen 59 in seinem oberen Rand 73 auf. Die Aussparungen 59 sind bevorzugt paarweise angeordnet, wobei zwischen den Aussparungen 59 eines Paares - ausgehend von der Längsachse L - ein Winkel von etwa 60° ausgebildet ist. Zwischen den Aussparungen 59 der zwei Paare ist jeweils ein Winkel von etwa 120° ausgebildet. Bei dem Ausführungsbeispiel der Fig. 4 und 5 mit einer Erweiterung 42 am Innentopf 10 beträgt beispielsweise ein Winkel zwischen der Erweiterung 42 und der ersten zu der Erweiterung 42 benachbarten Aussparung 59 etwa 60°. Von jeder der benachbarten Aussparungen 59 zur jeweils nächsten Aussparung 59 beträgt der Winkel ebenfalls etwa 60°.

Die Deckelverriegelungseinheit 7 weist an dem Deckelverriegelungselement 8 vier Verriegelungskulissen 34 auf, die mit den Nocken 35 formschlüssig zusammenwirken, um den Deckel 6 so zu verriegeln, dass er den Zubereitungsraum 5 verschließt. Die Verriegelungskulissen 34 sind gemeinsam mit dem Deckelverriegelungselement 8 um die Längsachse L bzw. die Rotationsachse R relativ zum Deckel 6 als auch zum Zubereitungsraum 5 rotierbar. Zum Zusammenwirken mit den am Deckel 6 ausgebildeten Nocken 35 weisen die Verriegelungskulissen 34 jeweils eine Anlaufschräge 36 auf, die bei einer Rotation des Deckelverriegelungselementes 8 in Richtung der Deckelverriegelungsposition eine axiale Verschiebung der Nocken 35 in einer Richtung parallel zur Längsachse L des Zubereitungsgefäßes 1a bewirkt, indem der Deckel 6 an den Nocken 35 in Richtung des Zubereitungsraumes 5 gezogen wird. Die Anlaufschräge 36 weist beispielsweise eine Länge zwischen 13 mm und 17 mm, insbesondere von etwa 15 mm, auf. Bei einer weiteren Rotation des Deckelverriegelungselementes 8 treten die Nocken 35 jeweils in die Ausnehmung 22 des Sperrmittels 19 ein und gleiten anschließend an einer Führungsschräge 47 aus der Ausnehmung 22 heraus, bis sie schließlich jeweils an einer im Wesentlichen orthogonal zur Längsachse L orientierten Verriegelungsfläche 37 anliegen, um den Deckel 6 zu verriegeln. Vorzugsweise sind die Verriegelungsfläche 37 und die erste Sperrfläche 20 um etwa 2,5 mm bis 4,5 mm, insbesondere etwa 3,5 mm, entlang der Rotationsachse R zueinander versetzt angeordnet.

Befindet sich die Deckelverriegelungseinheit 7 gemäß Fig. 2b in der Deckelverriegelungsposition und versucht ein Benutzer, den Deckel 6 durch eine Rotation des Deckelverriegelungselementes 8 in Richtung der Deckelfreigabeposition zu entriegeln, wirkt aber noch eine von dem Zubereitungsraum 5 ausgehende Kraft auf den Deckel 6, werden die Nocken 35 bei einer Bewegung in Richtung der Deckelfreigabeposition gemeinsam mit dem Deckel 6 im Rahmen einer translatorischen Bewegung in die Ausnehmung 22 gedrückt. Durch das formschlüssige Zusammenwirken der Nocken 35 mit zumindest einem Teil der jeweiligen zweiten Sperrfläche 23 wird dann eine weitere Bewegung des Deckelverriegelungselementes 8 in Richtung der Deckelfreigabeposition mechanisch blockiert. Das Sperrmittel 19 befindet sich in der Sperrposition.

Durch diese Funktion wird erfindungsgemäß sichergestellt, dass der Deckel von einem Benutzer nur geöffnet werden kann, wenn keine Speisen mehr heraustreten können. Zudem wird sichergestellt, dass eine Blockierung des Öffnens des Deckels 6 nur dann erfolgt, wenn wirklich eine Kraft auf den Deckel 6 wirkt. Dadurch werden unnötige Wartezeiten für einen Benutzer vermieden.

Das rotierbar gelagerte Deckelverriegelungselement 8 stützt sich zumindest in der Deckelverriegelungsposition gemäß Fig. 2c an einer Unterseite eines oberen Randes des Innentopfes 10 ab, um eine Kraftübertragung in einer Richtung parallel zur Längsachse L des Zubereitungsgefäßes 1a bzw. der Rotationsachse R zu erreichen.

An dem Deckelverriegelungselement 8 ist genau ein Anschlagelement 48 - siehe Fig. 10b - ausgebildet, das in der Deckelverriegelungsposition an genau einem Nocken 35, 35b anliegt, um eine weitere Rotation des Deckelverriegelungselementes 8 zu verhindern und dadurch die Deckelverriegelungsposition zu definieren. Das Anliegen ist beispielsweise von einer Steuereinheit der Küchengerätebasis 3 erkennbar. Der Nocken 35,35b ist in einem an dem Deckel 6 - der Deckelunterseite - ausgerichteten Polarkoordinatensystem, bei dem die Längsachse L bzw. die Rotationsachse R den Pol bildet und das Griffstück 45 bei 0° angeordnet ist, etwa auf 240° angeordnet. Der Nocken 35,35b, dessen Anliegen erkennbar ist, ist also einer der Nocken 35, die im Vergleich zu den anderen Nocken am weitesten entfernt zur Abstützeinheit 14 angeordnet ist.

Dadurch wird die Zuverlässigkeit des Erkennens des Anliegens gesteigert. Durch die Verwendung von nur einem Anschlagelement 48 ist die Deckelverriegelungsposition eindeutig definiert. Vorzugsweise ist vorgesehen, dass eine Antriebseinheit 15 der Küchengerätebasis 3, mit der vorzugsweise das Deckelverriegelungselement 8 rotierbar ist, eine gesteigerte Stromstärke an einem Motor erfasst und dann den Motor abschaltet. Das Anschlagelement 48 ist als Teil der Verriegelungskulisse 34 ausgebildet und erstreckt sich senkrecht zur Verriegelungsfläche 37.

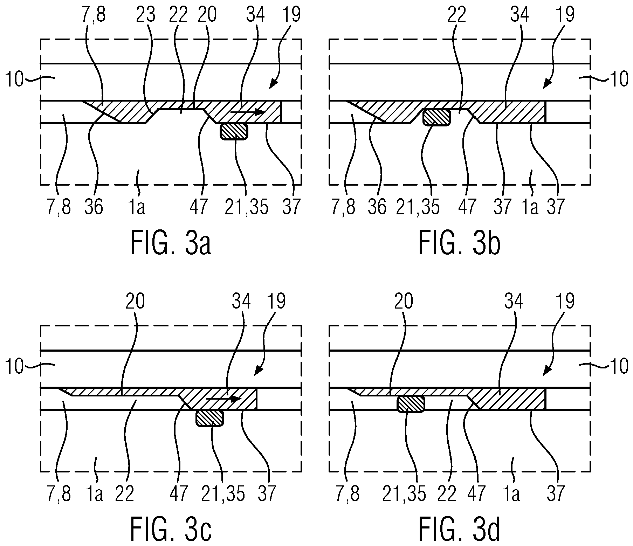

Fig. 3a und Fig. 3b zeigen ein Ausführungsbeispiel eines prinzipiellen Aufbaus eines Sperrmittels 19 in teilweise geschnittener Detailansicht, welches das Funktionsprinzip des Sperrmittels 19 verdeutlicht, das auch in den Fig. 2a bis 2c verwendet wird. Ausgehend von der Deckelsperrposition in Fig. 3a, in der der am Deckel 6 angeordnete Nocken 35 (siehe beispielhaft Fig. 13), an der Sperrfläche 37 anliegt, erfolgt ein Rotieren des Deckelverriegelungselementes 8 gemäß Fig. 3a in Pfeilrichtung nach rechts, wenn das Deckelverriegelungselement 8 in die Deckelfreigabeposition verbracht werden soll. Der Nocken 35 bildet gleichzeitig ein Sperrelement 21 des Sperrmittels 19.

Wirkt nun während der Bewegung des Deckelverriegelungselements 8 in Richtung der Deckelfreigabeposition eine aus dem Zubereitungsraum 5 resultierende Kraft auf den Deckel 6 bzw. zieht ein Benutzer an dem Deckel 6, wandert das Sperrelement 21 bzw. der Nocken 35 durch eine translatorische Bewegung des Deckels 6 in die Ausnehmung 22 des Sperrmittels 19 an der Verriegelungskulisse 34, bis der Nocken 35 an der ersten Sperrfläche 20 und an der zweiten Sperrfläche 23 anliegt. Die erste Sperrfläche 20 begrenzt die translatorische Bewegung des Deckels 6 vom Zubereitungsgefäß 1a weg und die zweite, schräg angeordnete Sperrfläche 23 verhindert mechanisch eine weitere Rotation des Deckelverriegelungselementes 8 in Richtung der Deckelfreigabeposition (siehe Sperrposition gemäß Fig. 3b). Beispielsweise wird diese mechanische Blockade von einer Steuereinheit der Küchengerätebasis 3 erkannt, die eine Rotation des Deckelverriegelungselements 8 zurück in die Deckelverriegelungsposition gemäß Fig. 3a veranlasst.

Fig. 3c und Fig. 3d zeigen ein alternatives Ausführungsbeispiel eines prinzipiellen Aufbaus eines Sperrmittels 19 in teilweise geschnittener Detailansicht. Gemäß Fig. 3c befindet sich der Deckel 6 in der Deckelverriegelungsposition, in der der Nocken 35 des Deckels an der Verriegelungsfläche 37 anliegt. Der Nocken 35 bildet auch hier das Sperrelement 21 des Sperrmittels 19. Wird nun das Deckelverriegelungselement 8 gemäß Fig. 3c nach rechts in Richtung der Deckelfreigabeposition rotiert und wirkt eine vom Zubereitungsraum 5 ausgehende Kraft auf den Deckel 6 bzw. zieht ein Benutzer an dem Deckel 6, erfolgt eine translatorische Bewegung des Deckels 6 und damit des Nockens 35 in die Ausnehmung 22 hinein, bis der Nocken 35 an der ersten Sperrfläche 20 anliegt. Die translatorische Bewegung des Deckels 6 wird beispielsweise von einem - nicht dargestellten - Sensor erfasst und die weitere Bewegung des Deckelverriegelungselementes 8 in Richtung der Freigabeposition gestoppt. Bei diesem Ausführungsbeispiel weist die Ausnehmung 22 keine zweite Sperrfläche 23 auf, die Blockierung erfolgt mittels der Steuereinheit.

Das Deckelverriegelungselement 8 ist - wie beschrieben - gemäß Fig. 2a bis 2c zwischen einer Deckelfreigabeposition und einer Deckelverriegelungsposition rotierbar, um den Deckel 6 mit dem Zubereitungsgefäß 1a zu verriegeln. Um zu verhindern, dass der Deckel 6 während der Bewegung des Deckelverriegelungselementes 8 um die Rotationsachse R des Deckelverriegelungselementes 8 rotiert, weist das Zubereitungsmodul 1 gemäß Fig. 2a bis 2c, 4, 5, 13, 14 und 15 eine Abstützeinheit 14 auf, die derart ausgebildet ist, dass sie eine axiale Bewegung des Deckels 6 in einer Richtung parallel zur Rotationsachse R bzw. zur Längsachse L zulässt, gleichzeitig aber eine Rotation des Deckels 6 verhindert, wenn dieser auf das Zubereitungsgefäß 1a aufgebracht ist. Die Abstützeinheit 14 weist gemäß den Ausführungsbeispielen der Fig. 2a bis 2c, 4, 5, 13 und 15 ein Abstützelement 24 in Form einer Erweiterung 42 an dem Innentopf 10 und ein Abstützgegenelement 25 in Form einer Ausnehmung an dem Deckel 6 auf.

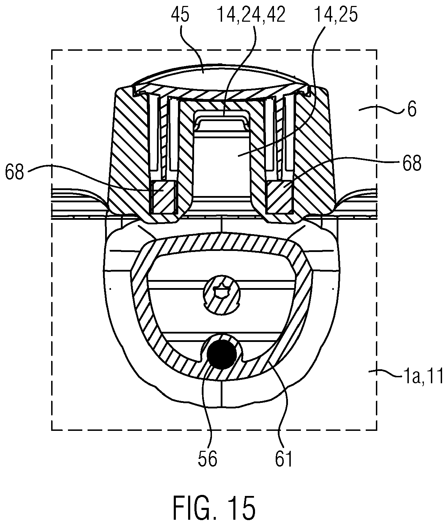

Das Abstützgegenelement 25 und das Abstützelement 24 wirken im aufgebrachten Zustand des Deckels 6 formschlüssig zusammen, so dass der Deckel 6 nicht um die Rotationsachse R rotieren kann, aber in einer Richtung im Wesentlichen parallel zur Rotationsachse R von dem Zubereitungsgefäß 1a entnommen werden kann (siehe insbesondere Fig. 15). Das Abstützelement 24 in Form der Erweiterung 42 kann sich in Höhenrichtung des Abstützgegenelements 25 in Form der Ausnehmung bewegen, insbesondere während einer Verriegelung des Deckels 6 mit dem Zubereitungsgefäß 1a. Die unterschiedlichen Positionen des Abstützelements 24 in dem Abstützgegenelement 25 lassen sich beispielsweise Fig. 2a bis Fig. 2c entnehmen. In der Deckelverriegelungsposition gemäß Fig. 2b ist die Position anders als in der Deckelfreigabeposition gemäß Fig. 2a.

Zusätzlich sind das Abstützelement 24 und das Abstützgegenelement 25 derart ausgebildet, dass der Deckel 6 durch einen Druck auf das Griffstück 45 um eine von dem Abstützelement 24 definierte Achse nach oben verkippt werden kann. Das Abstützelement 24 ist bei diesem Ausführungsbeispiel als im Wesentlichen U-förmige Erweiterung 42 an dem Innentopf 10 ausgebildet. Die Erweiterung 42 ist einstückig mit dem Innentopf 10 ausgebildet. Insbesondere gemäß Fig. 4 und 5 ist die Erweiterung 42 an einem oberen Rand 73 des Innentopfes 10 ausgebildet. Um insbesondere das Einführen des Abstützelementes 24 in das Abstützgegenelement 25 zu vereinfachen, weist das Abstützgegenelement 25 gemäß Fig. 13 zwei gegenüberliegend zueinander ausgebildete Einführschrägen 44 auf, die das Hineingleiten der Erweiterung 42 gemäß Fig. 4 und Fig. 5 beim Aufbringen des Deckels 6 auf das Zubereitungsgefäß 1a vereinfachen (siehe auch Fig. 15). Gemäß Fig. 13 und 15 ist das Abstützgegenelement 25 im Bereich des Griffstücks 45 des Deckels 6 angeordnet.

Fig. 13 zeigt einen Deckel 6 für ein Zubereitungsgefäß 1 von einer Unterseite. Im Bereich des Griffstücks 45 weist der Deckel 6 das Abstützgegenelement 25 in Form einer länglichen Ausnehmung auf, die sich im Wesentlichen parallel zur Rotationsachse R bzw. zur Längsachse L des Zubereitungsgefäßes 1a erstreckt, wenn sich der Deckel 6 auf dem Zubereitungsgefäß 1a befindet. Das Abstützgegenelement 25 dient der Verhinderung einer Rotation des Deckels 6 bei einer Bewegung des Deckelverriegelungselementes 8, indem das Abstützgegenelement 25 mit dem Abstützelement 24 in Form der Erweiterung 42 am Innentopf 10 (siehe Fig. 2a bis 3c, 4, 5 und 9) formschlüssig zusammenwirkt, wenn der Deckel 6 auf ein Zubereitungsgefäß 1a aufgebracht ist. Die vier Nocken 35 erstrecken sich radial nach innen. Jeder Nocken 35 weist eine geneigte Nockenfläche 35a zum Zusammenwirken mit der Anlaufschräge 36 einer Verriegelungskulisse 34 auf (siehe Fig. 2a bis 2c).

In einem an dem Deckel 6 - der Deckelunterseite -- ausgerichteten Polarkoordinatensystem, bei dem die Längsachse L bzw. die Rotationsachse R den Pol bildet und das Griffstück 45 bei 0° angeordnet ist, sind die Nocken 35 etwa bei 60°, 120°, 240° und 300° angeordnet. Der Winkel zwischen dem Griffstück 45 und dem jeweils ersten Nocken 35 auf dem Umfang in beide Richtungen beträgt also etwa 60°. Auch der Winkel zwischen zwei auf einer Seite des Griffstücks 45 benachbarten Nocken 35 beträgt etwa 60°.

Um eine Zentrierung des Deckels 6 auf dem Zubereitungsgefäß 1a zu gewährleisten, weist der Deckel 6 an der Deckelunterseite eine Mehrzahl von Zentrierelementen 72 auf. Gemäß Fig. 13 sind genau fünf Zentrierelemente 72 an dem Deckel 6 ausgebildet. Die Zentrierelemente 72 stehen im Bereich des Rücksprungs 70 von einem inneren Rand 71 des Rücksprungs 70 in Richtung der Längsachse L hervor. Die Zentrierelemente 72 sind insbesondere von einer freien Kante des inneren Randes 71 weggewandt angeordnet. Jedes Zentrierelement 72 erstreckt sich nur über einen Teil der Höhe des inneren Randes 71 in dem Rücksprung 70.

Ein erstes Zentrierelement 72 ist auf dem Umfang des Deckels 6 gegenüberliegend zum Griffstück 45 angeordnet. Ein zweites und ein drittes Zentrierelement 72 sind in einem Polarkoordinatensystem an der Deckelunterseite, in dem die Längsachse L den Pol bildet und das Griffstück bei 0° angeordnet ist, bei Winkeln von etwa 90° und etwa 270° auf dem Umfang angeordnet. Das zweite und dritte Zentrierelement 72 sind vorteilhaft gegenüberliegend zueinander angeordnet. Ferner sind ein viertes und ein fünftes Zentrierelement 72 jeweils auf einer Seite des Abstützgegenelements 25 der Abstützeinheit 14 angeordnet.

Zumindest das zweite und das dritte Zentrierelement 72 weisen jeweils einen Steg 72a auf, der in radialer Richtung von dem Zentrierelement 72 hervorsteht. Der Steg 72a dient vorteilhaft zur axialen Positionierung des Deckels 6 im auf einem Zubereitungsgefäß 1a aufgebrachten Zustand.

Fig. 14 zeigt eine alternative Ausführungsform einer Abstützeinheit 14, die an einer Außenseite des Deckels 6 und des Zubereitungsgefäßes 1a ausgebildet ist. Das Abstützelement 24 wird dabei durch einen Handgriff 61 des Deckels 6 gebildet, wobei das Abstützgegenelement 25 als rechts und links des Handgriffs 61 ausgebildete Stege am Deckel 6 ausgebildet ist. Darüber hinaus ist es auch denkbar, dass das Abstützgegenelement 25 in Form von zwei Stegen am Gehäuse 11 angeordnet ist, und dass das Griffstück 45 als Abstützelement 24 dient.

Fig. 15 zeigt einen Schnitt durch den Handgriff 61 des Zubereitungsgefäßes 1a und zumindest teilweise durch den Deckel 6 im Bereich des Griffstücks 45. Im dargestellten Schnitt ist das Abstützgegenelement 25 in Form einer sich im Wesentlichen parallel zur Längsachse L des Zubereitungsgefäßes 1a erstreckenden Ausnehmung dargestellt, in die das Abstützelement 24 in Form einer von dem Innentopf 10 hervorstehenden Erweiterung 42 eingebracht ist. Die Erweiterung 42 ist im Wesentlichen U-förmig ausgebildet und einstückig mit dem Innentopf 10 verbunden. Die Erweiterung 42 kann sich in vertikaler Richtung gemäß Fig. 15 in dem Abstützgegenelement 25 bewegen. Zum Einführen während des Aufbringens des Deckels 6 weist das Abstützgegenelement 25 die zwei gegenüberliegend angeordnete Einführschrägen 44 auf. Ferner kann der Deckel um eine von dem Abstützelement 24 definierte Achse, beispielsweise durch einen Druck auf das Griffstück 45, verkippt werden, so dass er sich zumindest an einer Deckelseite öffnet.

Im Bereich des Ansatzes des Handgriffs 61 ist ein erstes Identifikationsmittel 56 angeordnet, das als Permanentmagnet ausgebildet ist. Ein Erkennungsmittel 55 an dem Innentopf 10, das insbesondere in einem Leitungsführungs- und Elektronikkanal 60 angeordnet ist, ist dazu ausgebildet, das Vorhandensein und/oder die Ausrichtung des Magneten - dessen Polarisierung - zu erkennen. Dadurch kann die Steuereinheit einer Küchengerätebasis 3 erkennen, ob der Innentopf 10 in einem Gehäuse 11 angeordnet ist oder nicht.

In dem Deckel 6, insbesondere im Griffstück 45, ist ferner ein zweites Identifikationsmittel 68 in Form von zwei Permanentmagneten angeordnet. Das Erkennungsmittel 55 ist zum Erkennen des Vorhandenseins und/oder der Ausrichtung der Permanentmagneten ausgebildet. Durch eine unterschiedliche Ausrichtung - Polarisierung - der Permanentmagneten können beispielsweise bis zu vier unterschiedliche Deckel 6 erkannt werden.

Durch unterschiedliche Ausrichtung der beiden Permanentmagneten Nord-Süd, Süd-Nord, Nord-Nord und Süd-Süd lassen sich insgesamt vier Kodierungen abfragen, mit denen beispielsweise unterschiedliche Ausführungsformen des Deckels 6 mit dem Erkennungsmittel 55 erkennbar sind. In Abhängigkeit von der Ausführungsform des Deckels 6 ist das zweite Identifikationsmittel 68 in Form der Permanentmagneten vorzugsweise unterschiedlich kodiert. Zudem ist über das Vorhandensein des zweiten Identifikationsmittels 68 erkennbar, dass überhaupt ein Deckel 6 auf das Zubereitungsgefäß 1a aufgebracht ist.

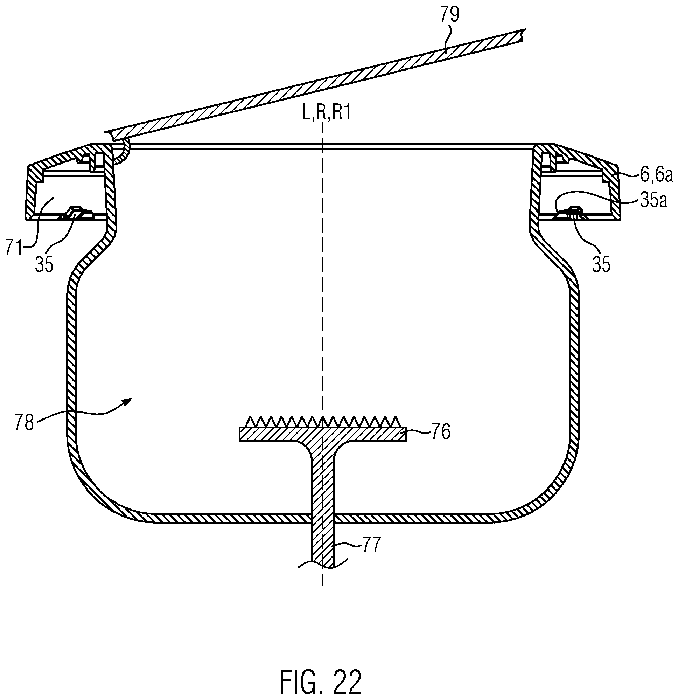

Fig. 22 zeigt ein Ausführungsbeispiel eines Funktionsmoduls 6a in geschnittener Ansicht. Da das Funktionsmodul 6a eine Deckelschnittstelle, hier z. B. mit Nocken 35 an einem inneren Rand 71, zum Zusammenwirken mit der Deckelverriegelungseinheit 7 bzw. dem Deckelverriegelungselement 8 aufweist, handelt es sich um einen Deckel 6, der als Funktionsmodul 6a ausgebildet ist. Das Funktionsmodul 6a weist ein Zubehörwerkzeug 76 auf, dass über eine Verbindungsschnittstelle 77 mit einem Werkzeug 26a und/oder einem Werkzeughalter 26 eines Zubereitungsgefäßes 1a (siehe z. B. Fig. 5) mechanisch koppelbar ist, insbesondere um ein Drehmoment auf das Zubehörwerkzeug 76 zu übertragen. Dadurch ist das Zubehörwerkzeug 76 um die Rotationsachse R1 rotierbar, die hier mit der Längsachse L und der Rotationsachse R zusammenfällt. Ein Innenraum 78 des Funktionsmoduls 6a ist mit einem von dem Funktionsmodul 6a abnehmbaren und/oder verschwenkbar gelagerten Abdeckelement 79 verschließbar. Im montierten Zustand ragt das Funktionsmodul 6a teilweise in den Zubereitungsraum 5 eines Zubereitungsgefäßes 1a bzw. eines Innentopfes 10 hinein.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

**Bezugszeichenliste**

| | | | |
|---|---|---|---|
| 1 | Zubereitungsmodul | 23 | zweite Sperrfläche |
| 1a | Zubereitungsgefäß | 24 | Abstützelement |
| 2 | Aufnahmebereich | 25 | Abstützgegenelement |
| 2a | Betätigungseinheit | 26 | Werkzeughalter |
| 3 | Küchengerätebasis | 26a | Werkzeug |
| 3a | Oberseite von 3 | 27 | Verriegelungseinheit |
| 3b | Anzeige- und Eingabevorrichtung | 28 | Träger |
| 4 | Küchengerät | 29 | Verriegelungsring |
| 5 | Zubereitungsraum | 30 | Außenring |
| 6 | Deckel | 31 | Haltesteg |
| 6a | Funktionsmodul | 32 | elektrische Gegenschnittstelle |
| 7 | Deckelverriegelungseinheit | 33 | Betätigungsgriff |
| 8 | Deckelverriegelungselement | 33a | alternativer Betätigungsgriff |
| 9 | elektrische Schnittstelle von 1a | 34 | Verriegelungskulisse |
| 10 | Innentopf | 35 | Nocken |
| 11 | Gehäuse | 35a | Nockenfläche |
| 12 | Gegenelement | 35b | Nocken für Erkennung |
| 13 | Übertragungselement | 36 | Anlaufschräge |
| 14 | Abstützeinheit | 37 | Verriegelungsfläche |
| 15 | Antriebseinheit | 38 | Haken |
| 15a | Motor | 39 | Einführelement |
| 15b | Zahnrad | 40 | Kontaktabdeckung |
| 16 | Betätigungselement | 41 | Steg |
| 17 | Halteelement | 42 | Erweiterung |
| 17a | Haltefläche | 43 | Unterer Rand |
| 18 | Mitnehmerelement | 43a | Stirnseite von 43 |
| 19 | Sperrmittel | 44 | Einführschräge |
| 20 | erste Sperrfläche | 45 | Griffstück |
| 21 | Sperrelement | 45a | erstes Griffstückelement |
| 22 | Ausnehmung | 45b | zweites Griffstückelement |
| 46 | Endanschlag | 76 | Zubehörwerkzeug |
| 47 | Führungsschräge | 77 | Verbindungsschnittstelle |
| 48 | Anschlagelement | 78 | Innenraum |
| 49 | Erstes Rückstellmittel | 79 | Abdeckelement |
| 50 | Zweites Rückstellmittel | | |
| 51 | Wirkabschnitt | | |
| 52 | Mitnehmergegenelement | L | Längsachse |
| 53 | Mitnehmergegenfläche | R | Rotationsachse |
| 54 | Rückstellfläche | R1 | Rotationsachse von 16 |
| 55 | Erkennungsmittel | | |
| 56 | Erstes Identifikationsmittel | | |
| 57 | Werkzeugschnittstelle | | |
| 58 | Lagerstelle von 12 | | |
| 59 | Aussparungen | | |
| 60 | Leitungsführungs- und Elektronikkanal | | |
| 61 | Handgriff | | |
| 62 | Lagerstellen von 8 | | |
| 63 | Ausnehmung | | |
| 64 | Stützelement | | |
| 65 | Nut | | |
| 66 | Führungsstück | | |
| 67 | Aufnahme für Rückstellmittel | | |
| 68 | Zweites Identifikationsmittel | | |
| 69 | Vorsprung | | |
| 70 | Rücksprung | | |
| 71 | Innerer Rand | | |
| 72 | Zentrierelemente | | |
| 72a | Steg | | |
| 73 | Oberer Rand | | |
| 74 | Rippe | | |
| 75 | Gegenrippe | | |

## Patentansprüche

1. Zubereitungsmodul (1) zum Anordnen in einem Aufnahmebereich (2) einer Küchengerätebasis (3), wobei das Zubereitungsmodul (1) mindestens ein Zubereitungsgefäß (1a) und mindestens einen Deckel (6) aufweist, wobei das Zubereitungsgefäß (1a) mindestens einen Zubereitungsraum (5) zur Aufnahme von Speisen und mindestens eine Deckelverriegelungseinheit (7) aufweist, wobei der Deckel (6) in mindestens einer Deckelfreigabeposition der Deckelverriegelungseinheit (7) abnehmbar und in mindestens einer Deckelverriegelungsposition der Deckelverriegelungseinheit (7) mit dem Zubereitungsgefäß (1a) verriegelt ist, wobei die Deckelverriegelungseinheit (7) mindestens ein Sperrmittel (19) aufweist,
wobei das Sperrmittel (19) in einer Sperrposition ein Bewegen der Deckelverriegelungseinheit (7) zumindest in die Deckelfreigabeposition verhindert, zumindest wenn eine Kraft aus dem Zubereitungsraum (5) auf den Deckel (6) wirkt,
**dadurch gekennzeichnet, dass**
die Deckelverriegelungseinheit (7) zumindest teilweise in Richtung der Deckelfreigabeposition bewegt ist, wenn sich das Sperrmittel (19) in der Sperrposition befindet, und dass das Sperrmittel (19) zumindest durch eine translatorische Bewegung des Deckels (6) in die Sperrposition gelangt.

2. Zubereitungsmodul (1) nach Anspruch 1,
**dadurch gekennzeichnet, dass**
das Sperrmittel (19) mindestens eine erste Sperrfläche (20) und mindestens ein Sperrelement (21) aufweist, und dass die translatorische Bewegung des Deckels (6) durch ein Anliegen des Sperrelements (21) an der ersten Sperrfläche (20) begrenzt wird, insbesondere dass die erste Sperrfläche (20) eine Fläche in einer Ausnehmung (22) ist.

3. Zubereitungsmodul (1) nach Anspruch 2,
**dadurch gekennzeichnet, dass**
das Sperrmittel (19) mindestens eine zweite Sperrfläche (23) aufweist, und dass das Sperrelement (21) in der Sperrposition durch ein zumindest teilweises Anliegen an der zweiten Sperrfläche (23) mechanisch an einer Bewegung in mindestens einer Richtung gehindert wird, insbesondere dass die zweite Sperrfläche (23) eine Seitenfläche in einer Ausnehmung (22) ist.

4. Zubereitungsmodul (1) nach Anspruch 2 oder 3,
**dadurch gekennzeichnet, dass**
die Deckelverriegelungseinheit (7) mindestens ein um eine Rotationsachse (R) rotierbar gelagertes Deckelverriegelungselement (8) aufweist, und dass zumindest die erste Sperrfläche (20) an dem Deckelverriegelungselement (8) ausgebildet ist, insbesondere dass das Deckelverriegelungselement (8) relativ zum Deckel (6) und relativ zum Zubereitungsraum (5) rotierbar ist.

5. Zubereitungsmodul (1) nach einem der Ansprüche 1 bis 4,
**dadurch gekennzeichnet, dass**
die Deckelverriegelungseinheit (7) zur Verriegelung des Deckels (6) mindestens eine Verriegelungskulisse (34) und mindestens einen Nocken (35) aufweist, dass der Nocken (35) und die Verriegelungskulisse (34) formschlüssig zusammenwirken, um den Deckel (6) zu verriegeln, insbesondere dass zumindest die erste Sperrfläche (20) an der Verriegelungskulisse (34) ausgebildet ist.

6. Zubereitungsmodul (1) nach Anspruch 5,
**dadurch gekennzeichnet, dass**
die Verriegelungskulisse (34) mindestens eine Anlaufschräge (36) aufweist, und dass die Anlaufschräge (36) bei einer Bewegung der Deckelverriegelungseinheit (7) zumindest eine axiale Verschiebung des Nockens (35) in einer Richtung parallel zu einer Längsachse (L) des Zubereitungsgefäßes (1) bewirkt.

7. Zubereitungsmodul (1) nach Anspruch 6,
**dadurch gekennzeichnet, dass**
die Verriegelungskulisse (34) mindestens eine Verriegelungsfläche (37) aufweist, und dass der Nocken (35) in der Verriegelungsposition an der Verriegelungsfläche (37) anliegt, und dass zumindest die erste Sperrfläche (20) zwischen der Anlaufschräge (36) und der Verriegelungsfläche (37) der Verriegelungskulisse (34) angeordnet ist und/oder dass die erste Sperrfläche (20) axial, insbesondere entlang einer Richtung parallel zur Längsachse (L) des Zubereitungsgefäßes (2), versetzt zu der Verriegelungsfläche (37) angeordnet ist.

8. Zubereitungsmodul (1) nach einem der Ansprüche 5 bis 7,
**dadurch gekennzeichnet, dass**
der Nocken (35) auch das Sperrelement (21) des Sperrmittels (19) ist, und dass der Nocken (35) bei einer Bewegung in Richtung der Deckelfreigabeposition in die Sperrposition gedrängt wird, wenn eine Kraft in einer Richtung parallel zu einer Längsachse (L) des Zubereitungsgefäßes (1a) auf den Deckel (6) wirkt, insbesondere dass der Nocken (35) an dem Deckel (6) und die Verriegelungskulisse (34) an einem um eine Rotationsachse (R) rotierbaren Deckelverriegelungselement (8) angeordnet ist.

9. Zubereitungsmodul (1) nach einem der Ansprüche 1 bis 8,
**dadurch gekennzeichnet, dass**
die erste Sperrfläche (20) in einer Ausnehmung (22) angeordnet ist, und dass die Ausnehmung (22) mindestens eine Führungsschräge (47) aufweist und/oder dass der Deckel (6) als Funktionsmodul (6a) ausgebildet ist.

10. Zubereitungsmodul (1) nach einem der Ansprüche 1 bis 9,
**dadurch gekennzeichnet, dass**
das Zubereitungsgefäß mindestens einen Innentopf (10) und mindestens ein Gehäuse (11) aufweist, insbesondere dass sich ein Deckelverriegelungselement (8) der Deckelverriegelungseinheit (7) zumindest in der Deckelverriegelungsposition zumindest an einer Unterseite eines Randes (43) des Innentopfs (10) abstützt.

11. Zubereitungsmodul (1) nach einem der Ansprüche 1 bis 10,
**dadurch gekennzeichnet, dass**
die Deckelverriegelungseinheit (7) mindestens ein Anschlagelement (48) aufweist, und dass das Anschlagelement (48) eine Bewegung der Deckelverriegelungseinheit (7) in der Deckelverriegelungsposition begrenzt, insbesondere dass das Anschlagelement (48) an dem Deckelverriegelungselement (8), vorzugsweise an der Verriegelungskulisse (34), ausgebildet ist.

12. Zubereitungsmodul (1) nach einem der Ansprüche 1 bis 11,
**dadurch gekennzeichnet, dass**
die Deckelverriegelungseinheit (7) mindestens ein um eine Rotationsachse (R) rotierbar gelagertes Deckelverriegelungselement (8) aufweist, dass mindestens ein Gegenelement (12) und mindestens ein Übertragungselement (13) vorhanden sind, dass das Gegenelement (12) zum Zusammenwirken mit einer Küchengerätebasis (3) ausgebildet ist, und dass das Gegenelement (12) und das Deckelverriegelungselement (8) über das Übertragungselement (13) derart miteinander in Verbindung stehen, dass eine Rotation des Verriegelungselements (16) um die Rotationsachse (R) eine Rotation des Deckelverriegelungselements (8) bewirkt, insbesondere dass das Übertragungselement (13) und das Gegenelement (12) einstückig ausgebildet sind.

13. Küchengerät (4) aufweisend mindestens eine Küchengerätebasis (3) und mindestens ein Zubereitungsmodul (1) nach einem der Ansprüche 1 bis 12, wobei die Küchengerätebasis (3) mindestens einen Aufnahmebereich (2) für das Zubereitungsgefäß (1a) aufweist, wobei der Aufnahmebereich (2) mindestens eine Betätigungseinheit (2a) zum mechanischen Verriegeln des Zubereitungsgefäßes (1a) aufweist, wobei die Betätigungseinheit (2a) mindestens eine Antriebseinheit (15), mindestens ein um eine Rotationsachse (R) rotierbar gehaltenes Betätigungselement (16) und mindestens ein ortsfestes Halteelement (17) aufweist, wobei die Küchengerätebasis (3) mindestens eine Steuereinheit aufweist, und dass die Steuereinheit dazu eingerichtet und ausgebildet ist zu erkennen, ob sich das Sperrmittel (19) in der Sperrposition befindet, und die Antriebseinheit (15) zu stoppen, wenn sich das Sperrmittel (19) in der Sperrposition befindet, insbesondere dass die Steuereinheit dazu eingerichtet und ausgebildet ist, die Sperrposition unter Verwendung mindestens einer Stromstärke an der Antriebseinheit (15) und/oder unter Verwendung mindestens eines Sensors, der eine Position und/oder Positionsveränderung des Deckels (6) erfasst, zu erkennen.

14. Küchengerät (4) nach Anspruch 13,
**dadurch gekennzeichnet, dass**
die Steuereinheit dazu eingerichtet und ausgebildet ist, die Antriebseinheit (15) zu veranlassen, die Deckelverriegelungseinheit (7) in die Deckelfreigabeposition zu überführen, wenn die Steuereinheit erkennt, dass sich das Sperrmittel (19) nicht mehr in der Sperrposition, insbesondere vollständig außerhalb der Sperrposition, befindet, und/oder wenn eine vorbestimmte Wartezeit verstrichen ist, nachdem die Steuereinheit erkannt hat, dass sich das Sperrmittel (19) in der Sperrposition befindet.

15. Küchengerät (4) nach Anspruch 13 oder 14,
**dadurch gekennzeichnet, dass**
die Steuereinheit dazu eingerichtet und ausgebildet ist, die Antriebseinheit (15) zu veranlassen, nach Erkennen der Sperrposition die Deckelverriegelungseinheit (7) wieder in die Deckelverriegelungsposition zu überführen und, insbesondere nach einer vorbestimmten Wartezeit, die Deckelverriegelungseinheit (7) erneut in Richtung der Deckelfreigabeposition zu bewegen, insbesondere die Steuereinheit dazu eingerichtet und ausgebildet ist, diesen Vorgang zu wiederholen, bis die Deckelverriegelungseinheit (7) in der Freigabeposition ist.

16. Verfahren zum Betrieb eines Zubereitungsmoduls (1) mit einem Zubereitungsgefäß (1a) und einem Deckel (6) oder einem Funktionsmodul (6a), aufweisend zumindest die folgenden Verfahrensschritte:
- Rotieren einer Deckelverriegelungseinheit (7) an dem Zubereitungsgefäß (1a) um eine Rotationsachse (R) zumindest zwischen einer Deckelfreigabeposition und einer Deckelverriegelungsposition, um den Deckel (6) oder das Funktionsmodul (6a) zu ver- und entriegeln,
- Verbringen eines Sperrmittels in eine Sperrposition, wenn während einer Rotation der Deckelverriegelungseinheit (7) in Richtung der Deckelfreigabeposition zumindest eine Kraft aus dem Zubereitungsraum (5) auf den Deckel (6) oder das Funktionsmodul (6a) wirkt, wobei das Verbringen des Sperrmittels in die Sperrposition eine translatorische Bewegung des Deckels (6) oder des Funktionsmoduls (6a) relativ zum Zubereitungsgefäß (1a), insbesondere in einer Richtung parallel zu der Rotationsachse (R), umfasst.

17. Verwendung eines Zubereitungsmoduls (1) nach einem der Ansprüche 1 bis 12 auf einer Küchengerätebasis (3), insbesondere auf einer Küchengerätebasis (3) eines Küchengeräts (4) nach einem der Ansprüche 13 bis 15.
